# EUROPEAN PATENT APPLICATION

(11) **EP 4 694 035 A1**
(43) Date of publication of application: **11.02.2026**
(21) Application number: 24848304.2
(22) Date of filing: 31.07.2024
(51) Int. Cl.: H04L 9/40

(54) **DEVICE SHARING METHOD AND SYSTEM, DEVICES AND COMPUTER-READABLE STORAGE MEDIUM**

(30) Priority: 03.08.2023 CN 202310976487
(71) Applicant: Huawei Technologies Co., Ltd., Shenzhen, Guangdong 518129 (CN)
(72) Inventor: XIA, Yonglin, Shenzhen, Guangdong 518129 (CN); HUI, Shaobo, Shenzhen, Guangdong 518129 (CN)
(74) Representative: MERH-IP Matias Erny Reichl Hoffmann Patentanwälte PartG mbB
(86) International application number: PCT/CN2024/108787
(87) International publication number: WO 2025/026349

(57) **Abstract**

Embodiments of this application disclose a device sharing method and system, a device, and a computer-readable storage medium. The system includes a first device, a cloud server, a second device, and a third device. A first account is logged in on the first device and the second device, and a second account is logged in on the third device. The first device sends a target message to the cloud server in response to an operation of sharing the second device with the second account, so that the cloud server transmits first trusted authorization information to the second device and transmits second trusted authorization information to the third device. The first trusted authorization information includes a device security credential of the third device, and the second trusted authorization information includes a device security credential of the second device. The second device and the third device perform device trusted authentication based on the device security credential of the peer device. In this way, the second device and the third device may perform trusted authentication on the device with the different account based on the device security credential, and do not need to perform authentication by entering a PIN code or scanning a code. An operation is simple, and user experience is better.

## Description

This application claims priority to Chinese Patent Application No. 202310976487.6, filed with the China National Intellectual Property Administration on August 3, 2023 and entitled "DEVICE SHARING METHOD AND SYSTEM, DEVICE, AND COMPUTER-READABLE STORAGE MEDIUM", which is incorporated herein by reference in its entirety.

### TECHNICAL FIELD

This application relates to the field of terminal technologies, and in particular, to a device sharing method and system, a device, and a computer-readable storage medium.

### BACKGROUND

With continuous development of terminal technologies and continuous popularization of terminal devices, types of terminal devices owned by a user are increasingly diversified, and a quantity of terminal devices owned by the user is also increasing.

Currently, when a user shares a terminal device owned by the user with another user for use (that is, device sharing), because different accounts are logged in on terminal devices of different users, a terminal device of the another user needs to complete trusted authentication in an authentication manner like scanning a code or entering a PIN code, to establish a connection to the terminal device shared by the user, so that the another user can use the terminal device shared by the user.

However, in a device sharing scenario, in the process in which the terminal device (namely, a device with a different account) of the another user establishes the connection to the terminal device (namely, a shared device) shared by the user, the user needs to manually scan the two-dimensional code or manually enter the PIN code to perform device trusted authentication, resulting in a cumbersome operation procedure and a subpar user experience.

### SUMMARY

Embodiments of this application provide a device sharing method and system, a device, and a computer-readable storage medium, to resolve a problem that a cumbersome operation procedure and a subpar user experience because in a process in which a device with a different account establishes a connection to a shared device, a user needs to manually scan a two-dimensional code or manually enter a PIN code to perform device trusted authentication.

According to a first aspect, an embodiment of this application provides a device sharing system, including a first device, a cloud server, a second device, and a third device, where a first account is logged in on the first device and the second device, a second account is logged in on the third device, and the first account is different from the second account.

The first device is configured to send a target message to the cloud server in response to one or more operations, where the target message includes first information indicating the first account and second information indicating the second account, and a first operation is used to share the second device with the second account.

The cloud server is configured to transmit first trusted authorization information to the second device and second trusted authorization information to the third device based on the first information and the second information, where the first trusted authorization information includes information about association between a device identifier of the third device and a first device security credential, and the second trusted authorization information includes information about association between a device identifier of the second device and a second device security credential. The first device security credential is a device security credential of the third device, and the second device security credential is a device security credential of the second device.

The second device is configured to: receive the first trusted authorization information from the cloud server, and store the first trusted authorization information, where the first trusted authorization information is authentication information used to authenticate the third device in a process of establishing a connection between the second device and the third device.

The third device is configured to: receive the second trusted authorization information from the cloud server, and store the second trusted authorization information, where the second trusted authorization information is authentication information used to authenticate the second device in the process of establishing the connection between the second device and the third device.

It can be learned from the foregoing that, after a user enters the one or more operations to the first device to authorize the second device and the second account to have a trusted relationship, the first device sends the target message to the cloud server in response to the one or more operations. The cloud server may learn, based on the target message, that devices of the first account and the device of the second account have a trusted authorization relationship, generate, based on the trusted authorization relationship, the information about association between the device identifier of the second device and the second device security credential and the information about association between the device identifier of the third device and the first device security credential, and correspondingly transmit the second device and the third device, to reflect a trusted authorization relationship on the cloud side based on a device security credential on the device side. In this way, the second device (namely, a shared device) and the third device (namely, a device with a different account) may authenticate, based on the device security credential of the peer device, whether the peer device is trusted. A user of the device with the different account does not need to perform device trusted authentication by entering a PIN code, scanning a two-dimensional code, or the like. Therefore, an operation is simpler, and user experience is better.

In some possible implementations of the first aspect, the first device is specifically configured to: display a group member adding interface in response to the first operation, where the first operation is an operation on a group member invitation control; receive a second operation performed on the group member adding interface, where the second operation is used to determine a user invited to join a group; and send the target message to the cloud server in response to a third operation. The first information includes an identifier of a group owner or information about the first account, the second information includes a member identifier of the invited user in the group or information about the second account, the group owner is the first account, an account of the user invited to join the group is the second account, and the second device is a device in the group.

In this way, the group owner may invite another user (namely, the second account) to join the group, to share the device in the group with the another user (namely, the second account), so that sharing of a device in a group with a device with a different account is supported in a group scenario, and like a device with a same account, the device with the different account can seamlessly and conveniently use the device (namely, a shared device) in the group. In this way, user experience is better.

In some possible implementations of the first aspect, the first device is specifically configured to: in response to a fourth operation, determine the second device from a plurality of devices on which the first account is logged in to, where the fourth operation is used to determine the shared device; and send the target message to the cloud server in response to a fifth operation, where the fifth operation is an operation on a member sharing option or at least one piece of user information displayed on a shared member selection interface, the fifth operation is used to determine the user with which the second device is shared, and an account of the user with which the second device is shared is the second account. The first information includes information about the second device or the information about the first account, and the second information includes the information about the second account. In this way, the user may specify to share a device with another user (namely, the second account), so that like a device with a same account, a device with a different account can seamlessly and conveniently use the shared device, and user experience is better.

In some possible implementations of the first aspect, the cloud server is specifically configured to: obtain device information of the second device based on the first information, and generate the information about association between the device identifier of the second device and the second device security credential based on the device information of the second device; and obtain device information of the third device based on the second information, and generate the information about association between the device identifier of the third device and the first device security credential based on the device information of the third device.

In some possible implementations of the first aspect, the cloud server is further configured to: obtain device information of the first device based on the first information, and generate information about association between a device identifier of the first device and a third device security credential based on the device information of the second device. The third device security credential is a device security credential of the first device.

The cloud server is specifically configured to: generate the second trusted authorization information based on the information about association between the device identifier of the second device and the second device security credential and the information about association between the device identifier of the first device and the third device security credential; and transmit the second trusted authorization information to the third device. In this case, the second trusted authorization information is authentication information used to authenticate the second device in the process of establishing the connection between the second device and the third device, or may be authentication information used to authenticate the first device in a process of establishing a connection between the first device and the third device.

The cloud server is further configured to transmit the first trusted authorization information to the first device.

The first device is further configured to: receive the first trusted authorization information from the cloud server, and store the first trusted authorization information. In this case, the first trusted authorization information is authentication information used to authenticate the third device in the process of establishing the connection between the first device and the third device.

In this implementation, after a device sharing operation, not only device security credentials of the second device and the third device are generated, but also the third device security credential of the first device is generated, the third device security credential of the first device is transmitted to the third device, and the first device security credential of the third device is transmitted to the first device. In this way, the first device and the third device (namely, the device with the different account) can also perform trusted device authentication based on the device security credential of the peer device, to conveniently and quickly establish a trusted connection to the device with the different account, and provide better user experience.

In some possible implementations of the first aspect, the device information of each of the first device, the second device, and the third device may include the device identifier and at least one of the following: device security level information, a device model, device version information, and inherent device attribute information. At least one of the device security level information, the device model, the device version information, and the inherent device attribute information is used to generate the device security credential. In this implementation, the device security credential is generated based on inherent information that remains unchanged for a long time, such as the device security level information, the device model, the device version information, and the inherent device attribute information, so that the generated device security credential can be valid for a long time.

In some possible implementations of the first aspect, the cloud server is specifically configured to: obtain the information about association between the device identifier of the second device and the second device security credential based on the first information; generate the second trusted authorization information based on the information about association between the device identifier of the second device and the second device security credential; obtain the information about association between the device identifier of the third device and the first device security credential based on the second information; generate the first trusted authorization information based on the information about association between the device identifier of the third device and the first device security credential; and transmit the second trusted authorization information to the third device and the first trusted authorization information to the second device. In this implementation, the cloud server may store a pre-generated device security credential of each device. Based on the information about the first account and the information about the second account, the device security credential and a device identifier of each device may be found, and an association relationship between the device identifier and the device security credential is generated accordingly.

In some possible implementations of the first aspect, the cloud server is further configured to: obtain the information about association between the device identifier of the first device and the third device security credential based on the first information; and transmit the first trusted authorization information to the first device.

The cloud server is specifically configured to generate the second trusted authorization information based on the information about association between the device identifier of the second device and the second device security credential and the information about association between the device identifier of the first device and the third device security credential.

In some possible implementations of the first aspect, the second trusted authorization information further includes the information about association between the device identifier of the first device and the third device security credential.

The first device is further configured to: obtain wireless broadcast information of the third device, where the wireless broadcast message of the third device includes the device identifier of the third device; and if the first device security credential corresponding to the device identifier of the third device is found from the first trusted authorization information, determine that the third device is a trusted device.

After the third device determines, based on the second trusted authorization information, that the first device is trusted, that is, after it is authenticated that the devices at the two ends are trusted, the first device and the third device establish a trusted communication connection. In this case, the second trusted authorization information is not only the authentication information used to authenticate the second device in the process of establishing the connection between the second device and the third device, but also authentication information used to authenticate the first device in the process of establishing the connection between the first device and the third device. Certainly, in another embodiment, one piece of third trusted authorization information may be separately generated, and the third trusted authorization information is sent to the third device. The third trusted authorization information is authentication information used to authenticate the first device in the process of establishing the connection between the first device and the third device. In this way, the first device and the third device (namely, the device with the different account) may also perform trusted device authentication based on the device security credential, so that a trusted connection is conveniently and quickly established, and user experience is better.

In some possible implementations of the first aspect, the second device is further configured to: obtain the wireless broadcast information of the third device, where the wireless broadcast message of the third device includes the device identifier of the third device; and if the first device security credential corresponding to the device identifier of the third device is found from the first trusted authorization information, determine that the third device is a trusted device. In this case, the second device may initiate a connection to the third device, and the third device receives a connection request from the second device. After the third device determines, based on the second trusted authorization information, that the second device is trusted, that is, after it is authenticated that the devices at the two ends are trusted, the second device and the third device establish a trusted communication connection. In this way, the second device (namely, the shared device) and the third device (namely, the device with the different account) may authenticate, based on the device security credential of the peer device, whether the peer device is trusted, so that a trusted connection is conveniently and quickly established, and user experience is better.

Alternatively, the third device is further configured to: obtain wireless broadcast information of the second device, where the wireless broadcast information of the second device includes the device identifier of the second device; and if the second device security credential corresponding to the device identifier of the second device is found from the second trusted authorization information, determine that the second device is a trusted device. In this case, the third device may initiate a connection to the second device, and the second device receives a connection request from the third device.

In some possible implementations of the first aspect, the second device is further configured to: automatically send a connection request to the trusted third device; or if there are at least two trusted third devices, display the at least two trusted third devices in a connectable device list, and in response to a selection operation performed by the user on the connectable device list, send a connection request to a trusted third device specified by the selection operation. In this way, the second device (namely, the shared device) may actively initiate a connection to the device with the different account based on the information about association between the device credential and the device identifier of the third device.

In some possible implementations of the first aspect, when displaying the connectable device list, the second device displays user information of a user to which a connectable device belongs and device information. For example, in a family group device sharing scenario, when displaying a connectable device list, a large-screen device displays Xiao Ming's Mate 30. The large-screen device locally stores association relationship between user information and device information.

In some possible implementations of the first aspect, the first device is further configured to send a sharing cancellation instruction to the cloud server in response to a sixth operation, where the sixth operation is used to cancel sharing of the second device with the second account.

The cloud server is further configured to: receive the sharing cancellation instruction from the first device, delete an authorization relationship between the second account and the second device in response to the sharing cancellation instruction, and send a first deletion instruction to the second device and a second deletion instruction to the third device.

The second device is configured to: receive the first deletion instruction from the cloud server, and delete the locally stored first trusted authorization information in response to the first deletion instruction.

The third device is configured to: receive the second deletion instruction from the cloud server, and delete the locally stored second trusted authorization information in response to the second deletion instruction.

In this implementation, when the user of the first device cancels device sharing, the trusted authorization information of the cloud server and the device security credential stored on the device side may be deleted in time.

In some possible implementations of the first aspect, the first device and the second device are a same device. In this case, the first device uses the first device as a shared device, and shares the first device with the second account for use.

In some possible implementations of the first aspect, if the first device, the second device, or the third device is powered off and then powered on again, the first device, the second device, or the third device is further configured to: after sending a query instruction to the cloud server, receive response information returned by the cloud server in response to the query instruction, where the query instruction is used to query whether a device sharing relationship is updated. In this way, it can be avoided that the device sharing relationship cannot be updated in time after the device sharing relationship changes (for example, sharing is canceled) during device power-off.

According to a second aspect, an embodiment of this application provides a device sharing method, applied to a first device. The method includes:
displaying a group member adding interface in response to a first operation, where the first operation is an operation on a group member invitation control; and
sending a target message to a cloud server in response to a second operation, where the target message is used to trigger the cloud server to transmit first trusted authorization information to a second device and transmit second trusted authorization information to a third device, the second operation is an operation on a member invitation option or at least one piece of user information displayed on the group member adding interface, and the second operation is used to determine a user invited to join a group.

The target message includes first information indicating a first account and second information indicating a second account, a group owner is the first account, the user invited to join the group is the second account, and the second device is a device in the group.

The first account is logged in on the first device and the second device, the second account is logged in on the third device, and the first account is different from the second account.

The first trusted authorization information includes information about association between a device identifier of the third device and a first device security credential.

The second trusted authorization information includes information about association between a device identifier of the second device and a second device security credential.

The first trusted authorization information is authentication information used to authenticate the third device in a process of establishing a connection between the second device and the third device, and the second trusted authorization information is authentication information used to authenticate the second device in the process of establishing the connection between the second device and the third device.

In some possible implementations of the second aspect, the first information includes an identifier of the group owner or information about the first account, the second information includes a member identifier of the invited user in the group or information about the second account.

According to a third aspect, an embodiment of this application provides a device sharing method, applied to a first device. The method includes:
in response to a first operation, determining a second device from a plurality of devices on which a first account is logged in to, where the first operation is used to determine a shared device; and
sending a target message to a cloud server in response to a second operation, where the target message is used to trigger the cloud server to transmit first trusted authorization information to the second device and transmit second trusted authorization information to a third device, the target message includes first information indicating the first account and second information indicating a second account, the second operation is an operation on a member sharing option or at least one piece of user information displayed on a shared member selection interface, the second operation is used to determine a user with who the second device is shared, and the user with who the second device is shared is the second account.

The first account is logged in on the first device and the second device, the second account is logged in on the third device, and the first account is different from the second account.

The first trusted authorization information includes information about association between a device identifier of the third device and a first device security credential.

The second trusted authorization information includes information about association between a device identifier of the second device and a second device security credential.

The first trusted authorization information is authentication information used to authenticate the third device in a process of establishing a connection between the second device and the third device, and the second trusted authorization information is authentication information used to authenticate the second device in the process of establishing the connection between the second device and the third device.

In some possible implementations of the third aspect, the first information includes information about the second device or information about the first account, and the second information includes information about the second account.

In some possible implementations of the second aspect or the third aspect, the group is a family group.

In some possible implementations of the second aspect or the third aspect, after sending the target message to the cloud server, the method further includes: sending a sharing cancellation instruction to the cloud server in response to a third operation, where the third operation is used to cancel sharing of the second device with the second account, the sharing cancellation instruction is used to trigger the cloud server to delete an authorization relationship between the second account and the second device, and send a first deletion instruction to the second device and a second deletion instruction to the third device, the first deletion instruction instructs the second device to delete the stored first trusted authorization information, and the second deletion instruction instructs the third device to delete the stored second trusted authorization information.

In some possible implementations of the second aspect or the third aspect, the second trusted authorization information further includes information about association between a device identifier of the first device and a third device security credential, and the method further includes:
receiving the first trusted authorization information from the cloud server; obtaining wireless broadcast information of the third device, where the wireless broadcast message of the third device includes the device identifier of the third device; if the first device security credential corresponding to the device identifier of the third device is found from the first trusted authorization information, determining that the third device is a trusted device; and after the third device determines, based on the second trusted authorization information, that the first device is a trusted device, establishing a communication connection to the third device.

According to a fourth aspect, an embodiment of this application provides a device sharing method, applied to a cloud server. The method includes:
receiving a target message from a first device, where the target message includes first information indicating a first account and second information indicating a second account, the first account is different from the second account, the target message is information sent by the first device in response to an operation of sharing a second device with the second account, and the first account is logged in on the first device and the second device; and
transmitting first trusted authorization information to the second device and second trusted authorization information to a third device based on the target message, where the second account is logged in on the third device.

The first trusted authorization information includes information about association between a device identifier of the third device and a first device security credential; the second trusted authorization information includes information about association between a device identifier of the second device and a second device security credential; and the first trusted authorization information is authentication information used to authenticate the third device in a process of establishing a connection between the second device and the third device, and the second trusted authorization information is authentication information used to authenticate the second device in the process of establishing the connection between the second device and the third device.

In some possible implementations of the fourth aspect, transmitting the first trusted authorization information to the second device and the second trusted authorization information to the third device based on the target message includes:
obtaining device information of the second device based on the first information, and generating the information about association between the device identifier of the second device and the second device security credential based on the device information of the second device;
obtaining device information of the third device based on the second information, and generating the information about association between the device identifier of the third device and the first device security credential based on the device information of the third device;
transmitting the second trusted authorization information to the third device based on the information about association between the device identifier of the second device and the second device security credential; and
transmitting the first trusted authorization information to the second device based on the information about association between the device identifier of the third device and the first device security credential.

In some possible implementations of the fourth aspect, the method further includes:
obtaining device information of the first device based on the first information, and generating the information about association between the device identifier of the first device and the third device security credential based on the device information of the second device.

Transmitting the second trusted authorization information to the third device based on the information about association between the device identifier of the second device and the device security credential includes:
generating the second trusted authorization information based on the information about association between the device identifier of the second device and the second device security credential and the information about association between the device identifier of the first device and the third device security credential; and
transmitting the second trusted authorization information to the third device.

In some possible implementations of the fourth aspect, transmitting the first trusted authorization information to the second device and the second trusted authorization information to the third device based on the target message includes:
obtaining the information about association between the device identifier of the second device and the second device security credential based on the first information;
generating the second trusted authorization information based on the information about association between the device identifier of the second device and the second device security credential;
obtaining the information about association between the device identifier of the third device and the first device security credential based on the second information;
generating the first trusted authorization information based on the information about association between the device identifier of the third device and the first device security credential; and
transmitting the second trusted authorization information to the third device, and transmitting the first trusted authorization information to the second device.

In some possible implementations of the fourth aspect, the method further includes:
obtaining the information about association between the device identifier of the first device and the third device security credential based on the first information; and
transmitting the first trusted authorization information to the first device.

Generating the second trusted authorization information based on the information about association between the device identifier of the second device and the second device security credential includes:
generating the second trusted authorization information based on the information about association between the device identifier of the second device and the second device security credential and the information about association between the device identifier of the first device and the third device security credential.

In some possible implementations of the fourth aspect, device information includes a device identifier and at least one of the following: device security level information, a device model, device version information, and inherent device attribute information.

In some possible implementations of the fourth aspect, the method further includes:
receiving a sharing cancellation instruction from the first device, where the sharing cancellation instruction is an instruction sent by the first device in response to an operation of canceling sharing of the second device with the second account; and
in response to the sharing cancellation instruction, deleting an authorization relationship between the second account and the second device, and sending a first deletion instruction to the second device and a second deletion instruction to the third device, where the first deletion instruction instructs the second device to delete the stored first trusted authorization information, and the second deletion instruction instructs the third device to delete the stored second trusted authorization information.

According to a fifth aspect, an embodiment of this application provides a device sharing method, applied to a second device. The method includes:
receiving first trusted authorization information from a cloud server, where the first trusted authorization information includes information about association between a device identifier of a third device and a first device security credential, a first account is logged in on a second device, a second account is logged in on the third device, and the first account is different from the second account, where
the first trusted authorization information is information sent by the cloud server based on first information from the first device, the target message includes the first information indicating the first account second information indicating the second account, the target message is information sent by the first device in response to a first operation, the first operation is used to share the second device with the second account, and the first account is logged in on the first device; and
storing the first trusted authorization information, where the first trusted authorization information is authentication information used to authenticate the third device in a process of establishing a connection between the second device and the third device.

In some possible implementations of the fifth aspect, the method further includes:
obtaining wireless broadcast information of the third device, where the wireless broadcast message of the third device includes the device identifier of the third device;
if the first device security credential corresponding to the device identifier of the third device is found from the first trusted authorization information, determining that the third device is a trusted device; and
automatically sending a connection request to the trusted third device; or if there are at least two trusted third devices, displaying the at least two trusted third devices in a connectable device list, and in response to a selection operation performed by a user on the connectable device list, sending a connection request to a trusted third device specified by the selection operation.

In some possible implementations of the fifth aspect, the method further includes: receiving a first deletion instruction from the cloud server, and deleting the locally stored first trusted authorization information in response to the first deletion instruction. The first deletion instruction is an instruction sent by the cloud server according to a sharing cancellation instruction from the first device, the sharing cancellation instruction is an instruction sent by the first device in response to a sixth operation, and the sixth operation is used to cancel sharing of the second device with the second account.

According to a sixth aspect, an embodiment of this application provides a device sharing system, including a first device, a second device, and a third device, where a first account is logged in on the first device and the second device, a second account is logged in on the third device, and the first account is different from the second account.

The first device is configured to send a target message to a cloud server in response to a first operation, where the target message includes first information indicating the first account and second information indicating the second account, the first operation is used to share the second device with the second account, and the target message is used to trigger the cloud server to transmit first trusted authorization information to the second device and transmit second trusted authorization information to the third device.

The second device is configured to: receive the first trusted authorization information from the cloud server, and store the first trusted authorization information, where the first trusted authorization information is authentication information used to authenticate the third device in a process of establishing a connection between the second device and the third device.

The third device is configured to: receive the second trusted authorization information from the cloud server, and store the second trusted authorization information, where the second trusted authorization information is authentication information used to authenticate the second device in the process of establishing the connection between the second device and the third device.

The first trusted authorization information includes information about association between a device identifier of the third device and a first device security credential, and the second trusted authorization information includes information about association between a device identifier of the second device and a second device security credential.

In some possible implementations of the sixth aspect, the first device is specifically configured to:
display a group member adding interface in response to a second operation, where the second operation is an operation on a group member invitation control; and send the target message to the cloud server in response to a third operation, where the third operation is an operation on a member invitation option or at least one piece of user information displayed on the group member adding interface, and the third operation is used to determine a user invited to join a group. The first information includes an identifier of a group owner or information about the first account, the second information includes a member identifier of the invited user in the group or information about the second account, the group owner is the first account, an account of the user invited to join the group is the second account, the second device is a device in the group, and the first operation includes the second operation and the third operation.

In some possible implementations of the sixth aspect, the first device is specifically configured to:
in response to a fourth operation, determine the second device from a plurality of devices on which the first account is logged in to, where the fourth operation is used to determine a shared device; and send the target message to the cloud server in response to a fifth operation, where the fifth operation is an operation on a member sharing option or at least one piece of user information displayed on a shared member selection interface, the fifth operation is used to determine a user with which the second device is shared, and an account of the user with which the second device is shared is the second account. The first information includes information about the second device or the information about the first account, the second information includes the information about the second account, and the first operation includes a fourth operation and a fifth operation.

In some possible implementations of the sixth aspect, the first device is further configured to: send a sharing cancellation instruction to the cloud server in response to a sixth operation, where the sixth operation is used to cancel sharing of the second device with the second account, and the sharing cancellation instruction is used to trigger the cloud server to delete an authorization relationship between the second account and the second device, and send a first deletion instruction to the second device and a second deletion instruction to the third device.

The second device is configured to: receive the first deletion instruction from the cloud server, and delete the locally stored first trusted authorization information in response to the first deletion instruction.

The third device is configured to: receive the second deletion instruction from the cloud server, and delete the locally stored second trusted authorization information in response to the second deletion instruction.

In some possible implementations of the sixth aspect, the second device is further configured to: obtain wireless broadcast information of the third device, where the wireless broadcast message of the third device includes the device identifier of the third device; and if the first device security credential corresponding to the device identifier of the third device is found from the first trusted authorization information, determine that the third device is a trusted device. After the third device determines, based on the second trusted authorization information, that the second device is trusted, the second device and the third device establish a trusted communication connection.

In some possible implementations of the sixth aspect, the second device is further configured to: automatically send a connection request to the trusted third device; or if there are at least two trusted third devices, display the at least two trusted third devices in a connectable device list, and in response to a selection operation performed by a user on the connectable device list, send a connection request to a trusted third device specified by the selection operation.

In some possible implementations of the sixth aspect, when displaying the connectable device list, the second device displays user information of a user to which a connectable device belongs and device information.

In some possible implementations of the sixth aspect, the second trusted authorization information further includes information about association between a device identifier of the first device and a third device security credential.

The first device is further configured to: obtain the wireless broadcast information of the third device, where the wireless broadcast message of the third device includes the device identifier of the third device; and if the first device security credential corresponding to the device identifier of the third device is found from the first trusted authorization information, determine that the third device is the trusted device.

After the third device determines, based on the second trusted authorization information, that the first device is trusted, that is, after it is authenticated that the devices at the two ends are trusted, the first device and the third device establish a trusted communication connection.

In some possible implementations of the sixth aspect, the first device and the second device are a same device. In this case, the first device uses the first device as a shared device, and shares the first device with the second account for use.

In some possible implementations of the sixth aspect, if the first device, the second device, or the third device is powered off and then powered on again, the first device, the second device, or the third device is further configured to: after sending a query instruction to the cloud server, receive response information returned by the cloud server in response to the query instruction, where the query instruction is used to query whether a device sharing relationship is updated. In this way, it can be avoided that the device sharing relationship cannot be updated in time after the device sharing relationship changes (for example, sharing is canceled) during power-off.

According to a seventh aspect, an embodiment of this application provides a device sharing method, applied to a device sharing system, where the device sharing system includes a first device, a second device, and a third device, a first account is logged in on the first device and the second device, a second account is logged in on the third device, and the first account is different from the second account. The method includes:

The first device sends a target message to a cloud server in response to one or more operations, where the target message includes first information indicating the first account and second information indicating the second account, a first operation is used to share the second device with the second account, and the target message is used to trigger the cloud server to transmit first trusted authorization information to the second device and transmit second trusted authorization information to the third device.

The second device receives the first trusted authorization information from the cloud server, and stores the first trusted authorization information, where the first trusted authorization information is authentication information used to authenticate the third device in a process of establishing a connection between the second device and the third device.

The third device receives the second trusted authorization information from the cloud server, and stores the second trusted authorization information, where the second trusted authorization information is authentication information used to authenticate the second device in the process of establishing the connection between the second device and the third device.

The first trusted authorization information includes information about association between a device identifier of the third device and a first device security credential, and the second trusted authorization information includes information about association between a device identifier of the second device and a second device security credential.

In some possible implementations of the seventh aspect, that the first device sends the target message to the cloud server in response to the one or more operations includes:
displaying a group member adding interface in response to a first operation, where the first operation is an operation on a group member invitation control; and sending the target message to the cloud server in response to a second operation, where the second operation is an operation on a member invitation option or at least one piece of user information displayed on the group member adding interface, and the second operation is used to determine a user invited to join a group. The first information includes an identifier of a group owner or information about the first account, the second information includes a member identifier of the invited user in the group or information about the second account, the group owner is the first account, the user invited to join the group is the second account, and the second device is a device in the group.

In some possible implementations of the sixth aspect, that the first device sends the target message to the cloud server in response to the one or more operations includes:
in response to a third operation, determining the second device from a plurality of devices on which the first account is logged in to, where the third operation is used to determine a shared device; and sending the target message to the cloud server in response to a fourth operation, where the fourth operation is an operation on a member sharing option or at least one piece of user information displayed on a shared member selection interface, the fourth operation is used to determine a user with which the second device is shared, and an account of the user with which the second device is shared is the second account. The first information includes information about the second device or the information about the first account, and the second information includes the information about the second account.

In some possible implementations of the seventh aspect, the method further includes:

The first device sends a sharing cancellation instruction to the cloud server in response to a fifth operation, where the fifth operation is used to cancel sharing of the second device with the second account, and the sharing cancellation instruction is used to trigger the cloud server to delete an authorization relationship between the second account and the second device, and send a first deletion instruction to the second device and a second deletion instruction to the third device.

The second device receives the first deletion instruction from the cloud server, and deletes the locally stored first trusted authorization information in response to the first deletion instruction.

The third device receives the second deletion instruction from the cloud server, and deletes the locally stored second trusted authorization information in response to the second deletion instruction.

In some possible implementations of the seventh aspect, the method further includes:

The second device obtains wireless broadcast information of the third device, where the wireless broadcast message of the third device includes the device identifier of the third device; and if the first device security credential corresponding to the device identifier of the third device is found from the first trusted authorization information, determines that the third device is a trusted device.

After the third device determines, based on the second trusted authorization information, that the second device is trusted, the second device and the third device establish a trusted communication connection.

In some possible implementations of the seventh aspect, that after the third device determines, based on the second trusted authorization information, that the second device is trusted, the second device and the third device establish the trusted communication connection includes:

The second device automatically sends a connection request to the trusted third device; or if there are at least two trusted third devices, displays the at least two trusted third devices in a connectable device list, and in response to a selection operation performed by a user on the connectable device list, sends a connection request to a trusted third device specified by the selection operation.

If the third device finds, from the second trusted authorization information based on the device identifier of the second device in the connection request, the second device security credential corresponding to the device identifier of the second device, the third device determines that the second device is trusted, and establishes the connection to the second device.

In some possible implementations of the seventh aspect, when displaying the connectable device list, the second device displays user information of a user to which a connectable device belongs and device information.

In some possible implementations of the seventh aspect, the second trusted authorization information further includes information about association between a device identifier of the first device and a third device security credential, and the method further includes:

The first device obtains the wireless broadcast information of the third device, where the wireless broadcast message of the third device includes the device identifier of the third device; and if the first device security credential corresponding to the device identifier of the third device is found from the first trusted authorization information, determines that the third device is the trusted device.

After the third device determines, based on the second trusted authorization information, that the first device is trusted, that is, after it is authenticated that the devices at the two ends are trusted, the first device and the third device establish a trusted communication connection.

In some possible implementations of the seventh aspect, the first device and the second device are a same device. In this case, the first device uses the first device as a shared device, and shares the first device with the second account for use.

In some possible implementations of the seventh aspect, if the first device, the second device, or the third device is powered off and then powered on again, the method further includes: After sending a query instruction to the cloud server, the first device, the second device, or the third device receives response information returned by the cloud server in response to the query instruction, where the query instruction is used to query whether a device sharing relationship is updated. In this way, it can be avoided that the device sharing relationship cannot be updated in time after the device sharing relationship changes (for example, sharing is canceled) during power-off.

According to an eighth aspect, an embodiment of this application provides an electronic device, including a memory, a processor, and a computer program that is stored in the memory and that can be run on the processor. When the processor executes the computer program, the method according to any one of the second aspect, the third aspect, or the fourth aspect is implemented. The electronic device may be a first device, a second device, a third device, or a cloud server.

According to a ninth aspect, an embodiment of this application provides a computer-readable storage medium. The computer-readable storage medium stores a computer program. When the computer program is executed by a processor, the method according to any one of the second aspect, the third aspect, or the fourth aspect is implemented.

According to a tenth aspect, an embodiment of this application provides a chip system, the chip system includes a processor, the processor is coupled to a memory, the processor executes a computer program stored in the memory, to implement the method according to any one of the second aspect, the third aspect, or the fourth aspect. The chip system may be a single chip or a chip module including a plurality of chips.

According to an eleventh aspect, an embodiment of this application provides a computer program product. When the computer program product runs on an electronic device, the electronic device is enabled to perform the method according to the second aspect, the third aspect, or the fourth aspect.

It may be understood that for beneficial effects of the second aspect to the eleventh aspect, refer to the related descriptions in the first aspect. Details are not described herein again.

### BRIEF DESCRIPTION OF DRAWINGS

FIG. 1A is a diagram of a multi-terminal device scenario according to an embodiment of this application;
FIG. 1B-1 and FIG. 1B-2 are diagrams of logging in to an account on a mobile phone according to an embodiment of this application;
FIG. 1C-1 and FIG. 1C-2 are diagrams of a Super home screen scenario according to an embodiment of this application;
FIG. 1D is a diagram of code scanning authentication according to an embodiment of this application;
FIG. 1E is a diagram of entering a PIN code for authentication according to an embodiment of this application;
FIG. 2 is a block diagram of a device sharing system according to an embodiment of this application;
FIG. 3 is a block diagram of a procedure of a device sharing method according to an embodiment of this application;
FIG. 4A-1 to FIG. 4A-5 are diagrams of a device sharing process according to an embodiment of this application;
FIG. 4B-1 to FIG. 4B-5 are diagrams of a process of inviting a family group member according to an embodiment of this application;

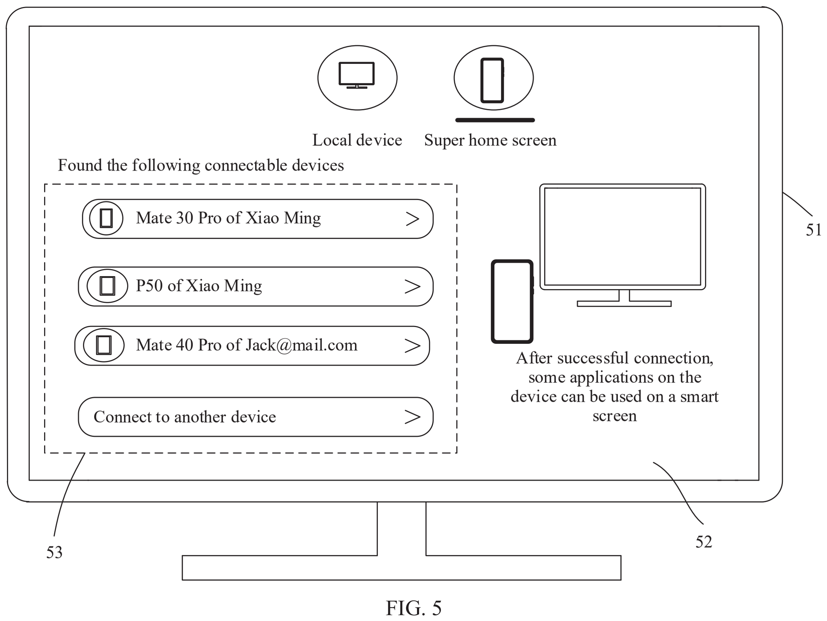

FIG. 5 is a diagram of a Super home screen scenario according to an embodiment of this application;

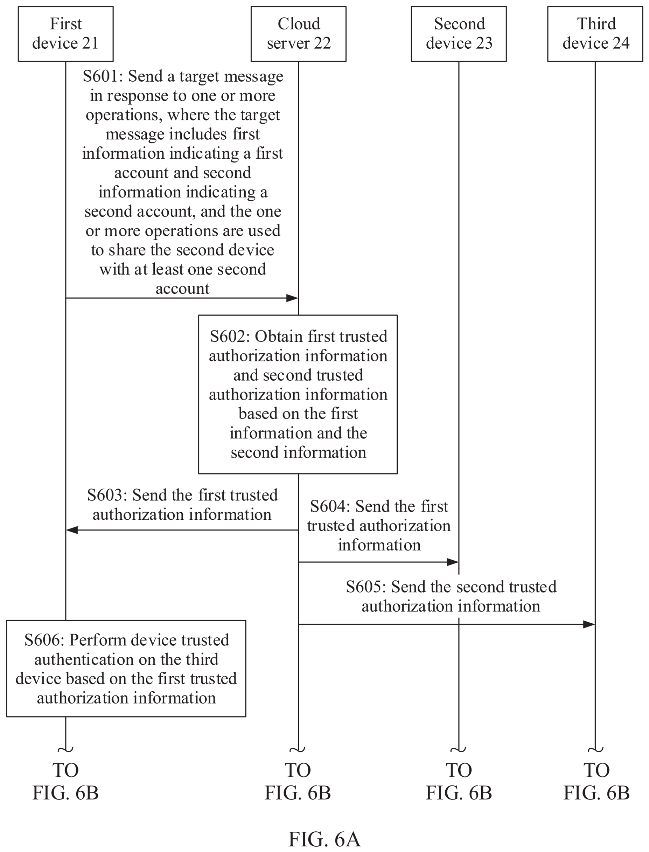

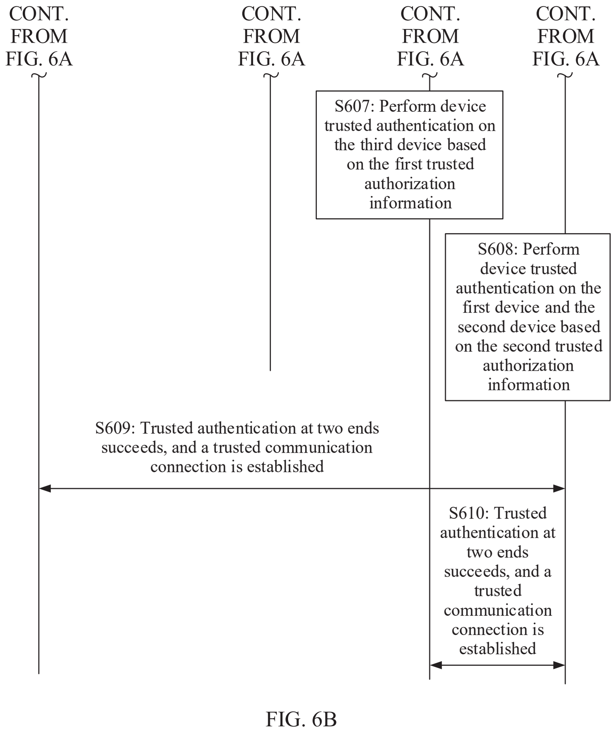

FIG. 6A and FIG. 6B are a block diagram of a procedure of a device sharing method according to an embodiment of this application;

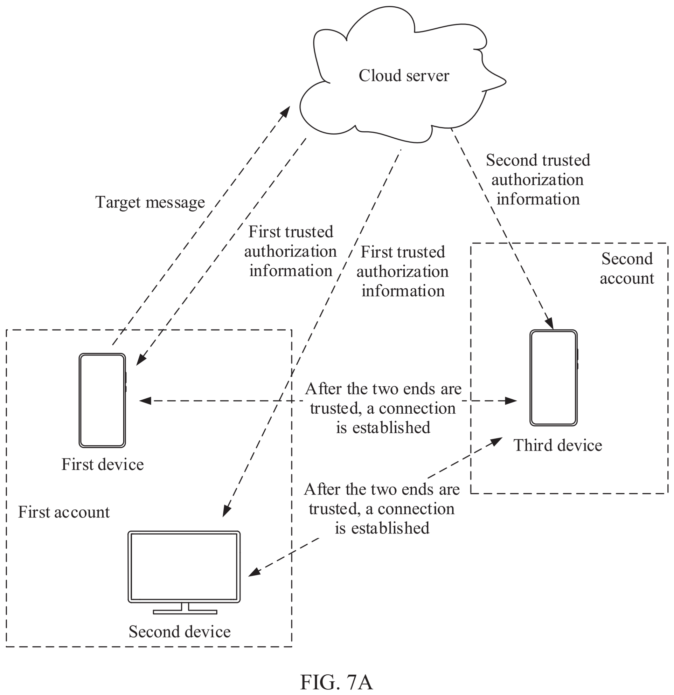

FIG. 7A is a diagram of a device sharing scenario according to an embodiment of this application;

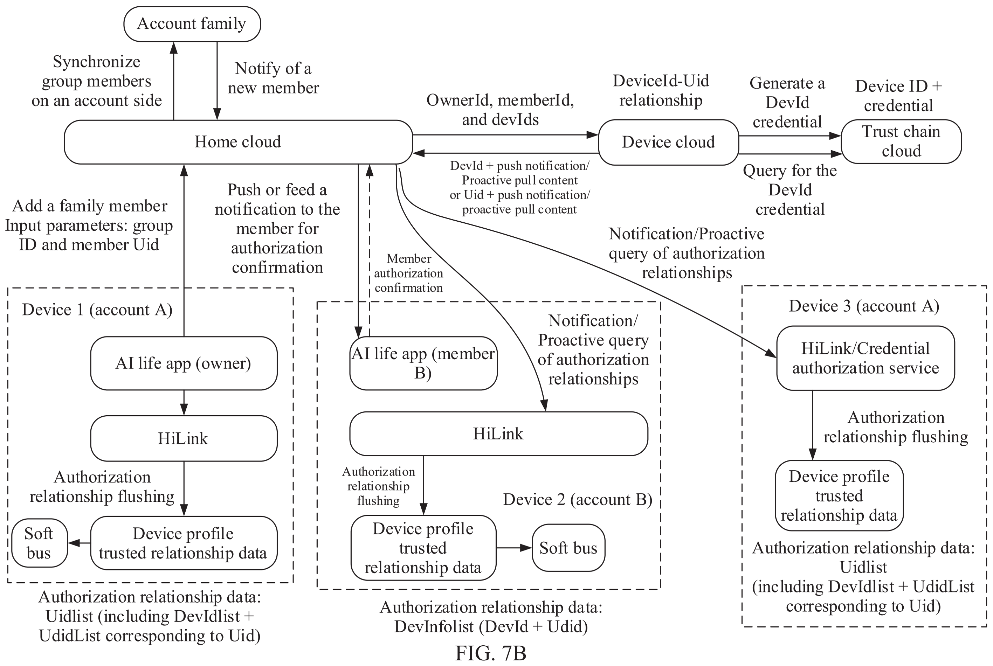

FIG. 7B is a diagram of a process of sharing a device in a family group according to an embodiment of this application;

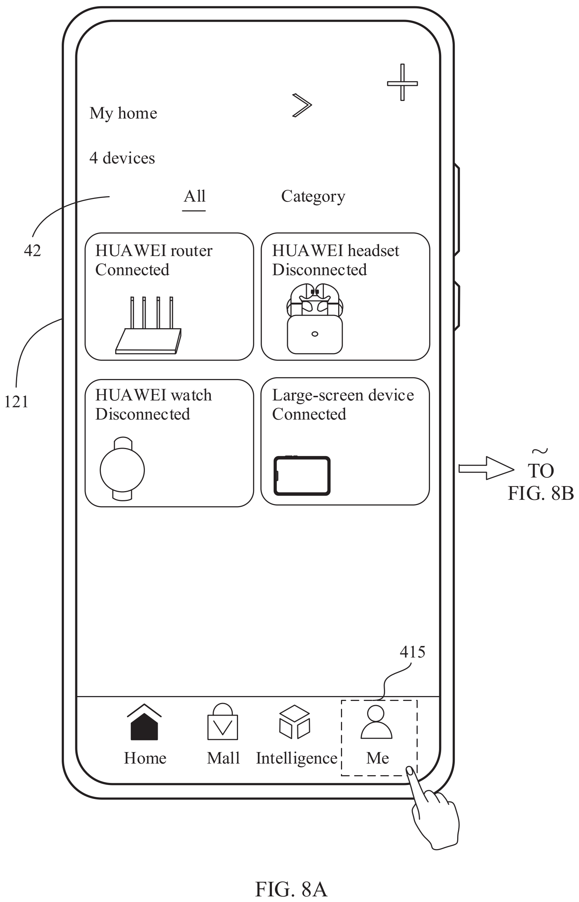

FIG. 8A to FIG. 8C are diagrams of a scenario of canceling device sharing according to an embodiment of this application;

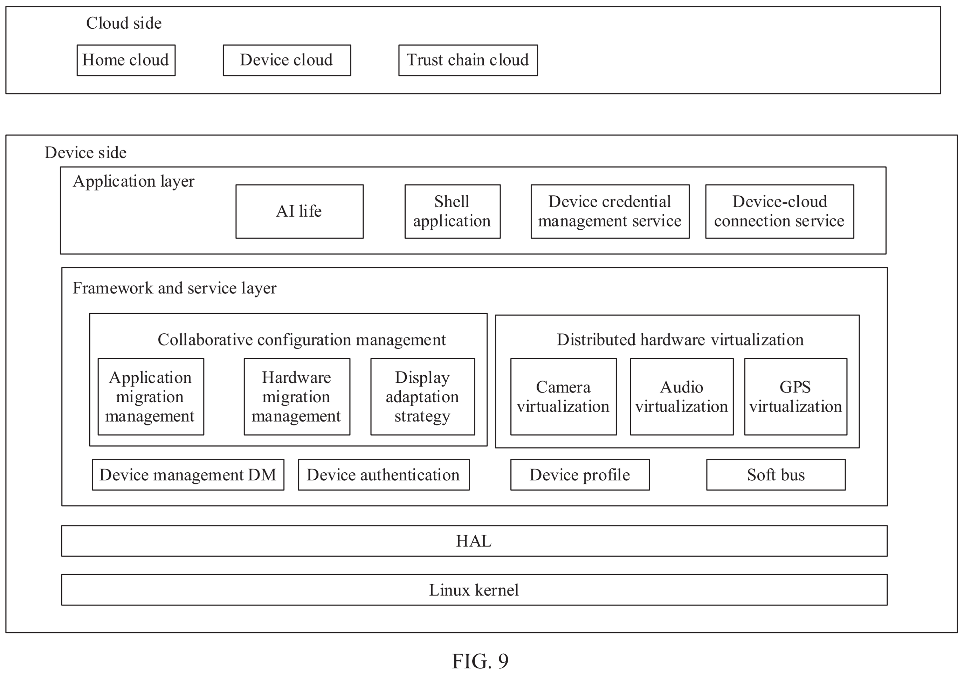

FIG. 9 is a diagram of a framework of a device sharing system according to an embodiment of this application;

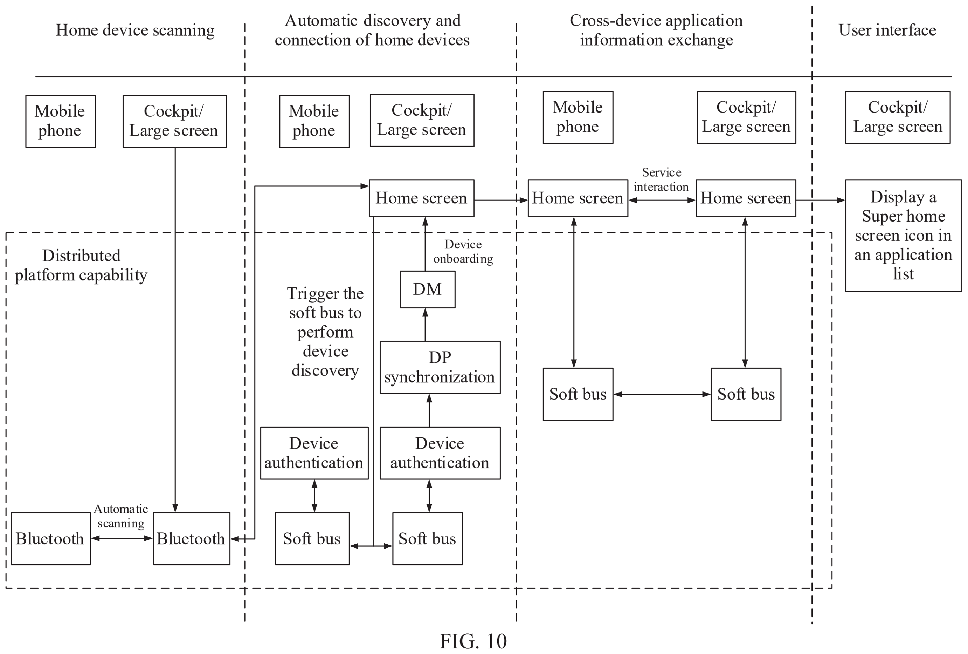

FIG. 10 is a diagram of a Super home screen implementation process in a family group device sharing scenario according to an embodiment of this application;

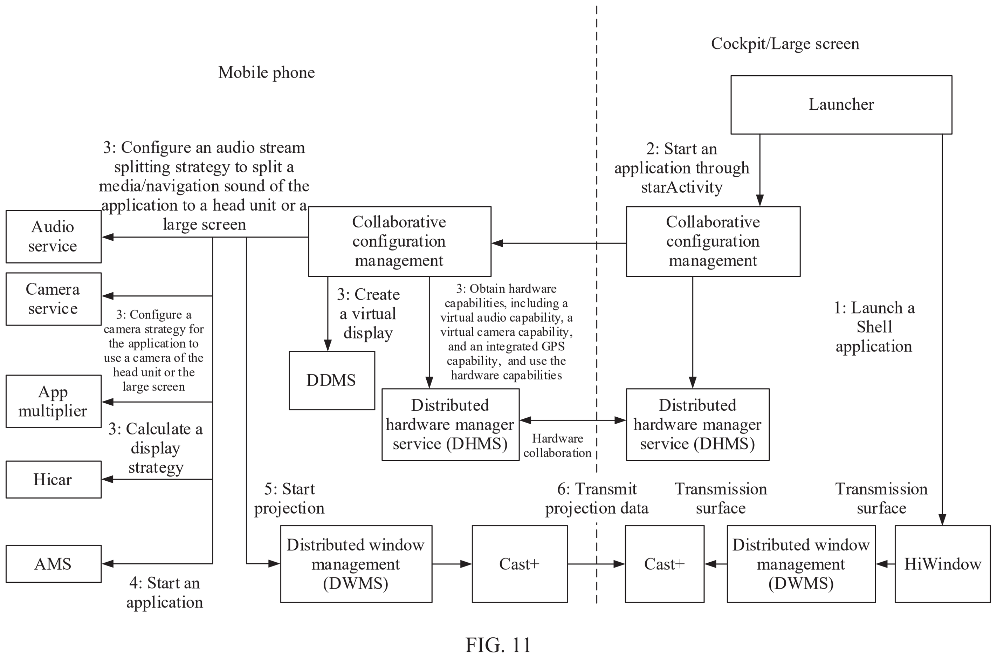

FIG. 11 is a diagram of a Super home screen service according to an embodiment of this application; and

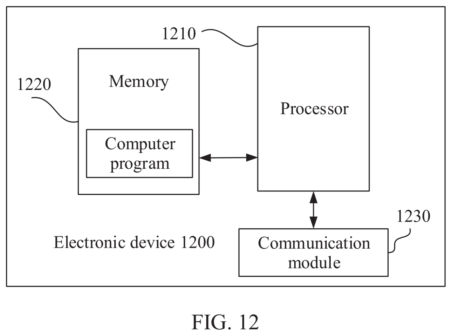

FIG. 12 is a diagram of a structure of an electronic device 1200 according to an embodiment of this application.

### DESCRIPTION OF EMBODIMENTS

In the following descriptions, for illustration instead of limitation, specific details such as a specific system structure and technology are provided, so as to thoroughly understand embodiments of this application.

A same account is usually logged in on a plurality of terminal devices of a same user, and different accounts are usually logged in on terminal devices of different users.

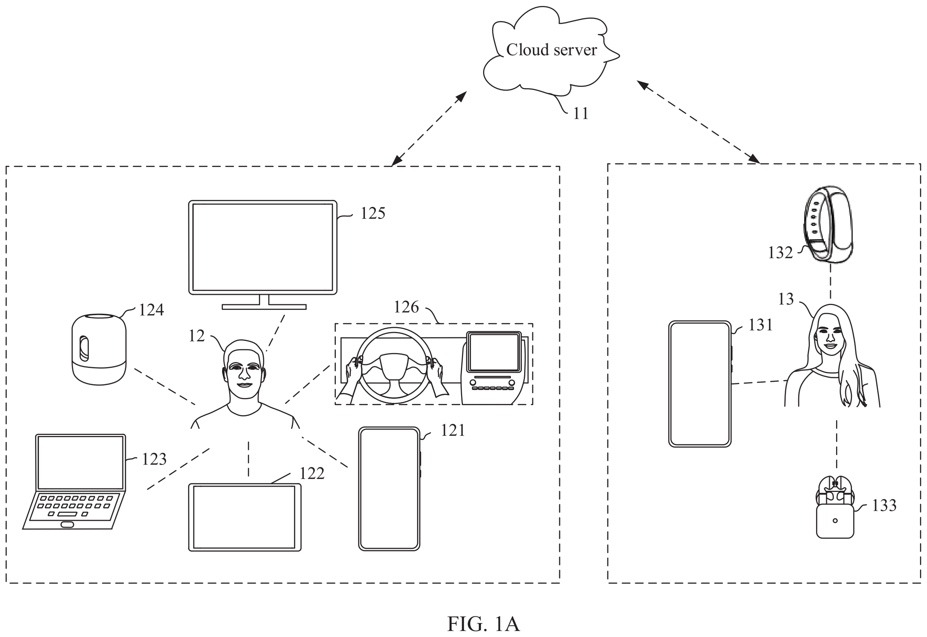

For example, FIG. 1A is a diagram of a multi-terminal device scenario according to an embodiment of this application. For example, the multi-device scenario includes a cloud server 11, a first user 12, and a second user 13. The first user 12 includes a mobile phone 121, a tablet 122, a computer 123, a smart speaker 124, a large-screen device 125, and an intelligent cockpit 126. The second user 13 includes a mobile phone 131, a smartwatch 132, and a Bluetooth headset 133.

A same account is logged in on all terminal devices of the first user 12, and a same account is also logged in on all terminal devices of the second user 13. However, the account that is logged in on the terminal devices of the first user 12 is different from the account that is logged in on those of the second user 13.

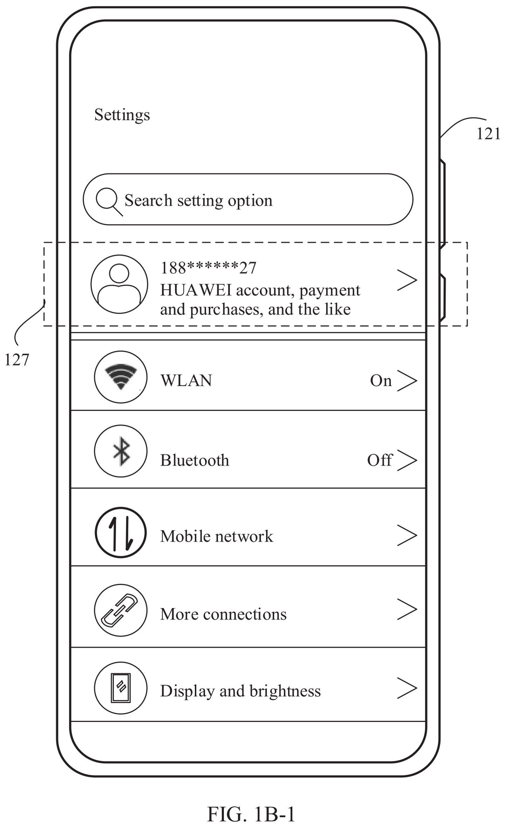

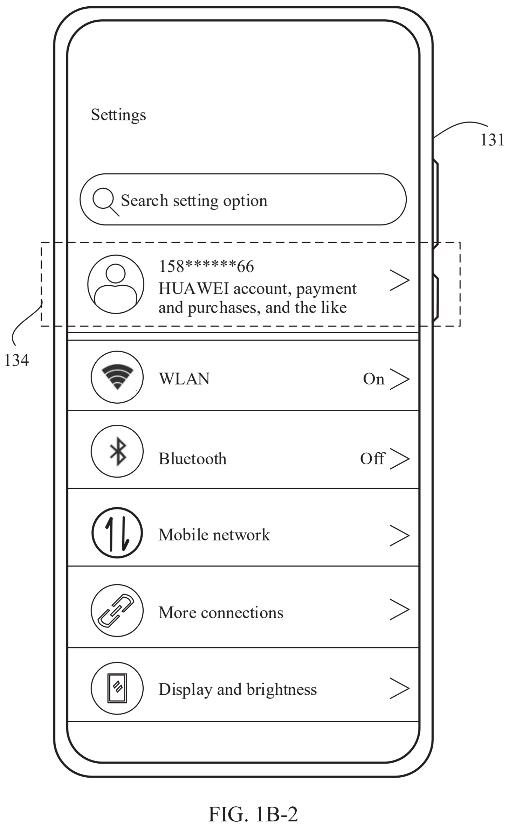

For example, FIG. 1B-1 and FIG. B-2 are diagrams of logging in to an account on a mobile phone according to an embodiment of this application. The account 127 is logged in on the mobile phone 121 of the first user 12, and the account 127 is logged in on all other terminal devices of the first user 12: the tablet computer 122, the computer 123, the smart speaker 124, the large-screen device 125, and the intelligent cockpit 126.

The account 134 is logged in on the mobile phone 131 of the second user 13, and the account 134 is logged in on all other terminal devices of the second user 13: the smartwatch 132 and the Bluetooth headset 133.

The account 127 is 188******27, and the account 134 is 158******66. The two accounts are different.

It may be understood that FIG. 1B-1 and FIG. 1B-2 show an example of using a mobile number as an account for login on a terminal device. However, in actual application, an email address or the like may alternatively be used for login on the terminal device. This is not limited to the mobile number. In addition, FIG. 1B-1 and FIG. 1B-2 show an example in which a HUAWEI account is logged in on both the two mobile phones. However, in actual application, accounts logged in on the two mobile phones may not belong to one manufacturer.

A plurality of terminal devices of the first user 12 may all be communicatively connected to the cloud server 11, and a plurality of terminal devices of the second user 13 may also be communicatively connected to the cloud server 11. Generally, the cloud server 11 stores related information of a terminal device of each user. For example, the cloud server 11 stores account information of the first user 12 and information about each terminal device associated with the account of the first user 12. The information about the terminal device may include, for example, a device identity document (Identity document, ID), a device model, device usage data (such as user behavior data), and application data.

In a distributed scenario, based on an account management capability, a distributed technology (for example, a distributed database), and the like, a trusted communication connection may be securely and conveniently established between terminal devices under a same account, and data synchronization is performed through the trusted communication connection, to implement a cross-device service.

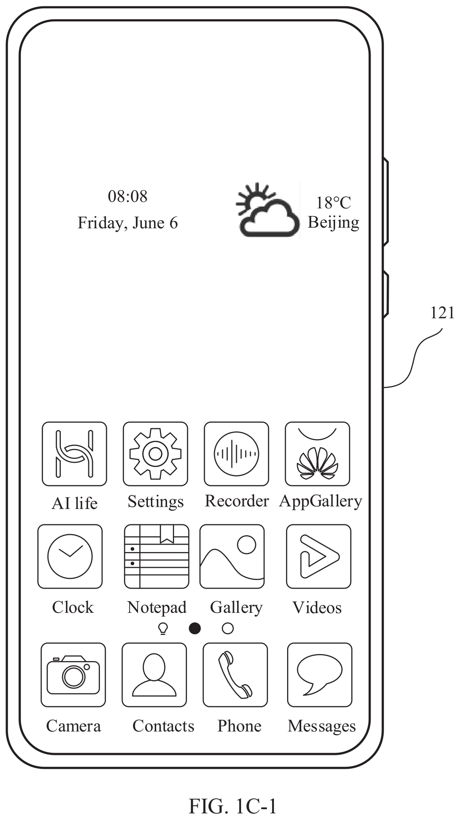

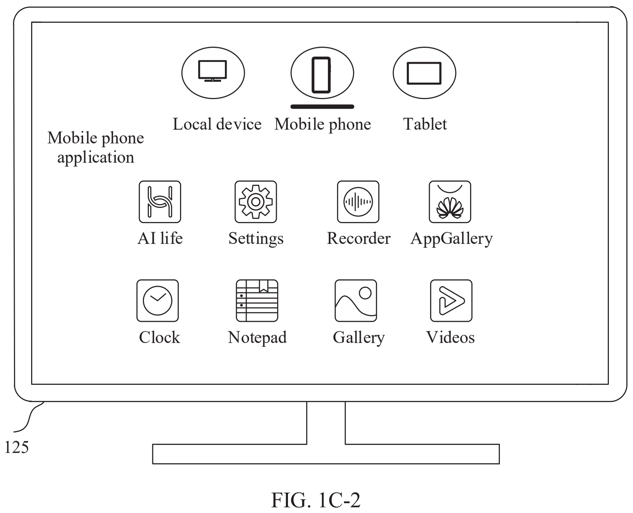

For example, FIG. 1C-1 and FIG. C-2 are diagrams of a Super home screen scenario according to an embodiment of this application. Both the mobile phone 121 and the large-screen device 125 are terminal devices of the first user 12, and the same account is logged in on the mobile phone 121 and the large-screen device 125. The mobile phone 121 and the large-screen device 125 first establish a trusted communication connection, and then synchronize data through the trusted communication connection, to implement a "Super home screen" service.

Specifically, the mobile phone 121 and the large-screen device 125 are in a same WLAN, and Bluetooth of both the mobile phone 121 and the large-screen device 125 is enabled. The user turns on a switch of "Super home screen" on the mobile phone 121, and enters "Super home screen" on the large-screen device 125. The user gradually moves the mobile phone 121 close to the large-screen device 125. The large-screen device 125 automatically discovers the mobile phone 121, and displays the mobile phone 121 in a connectable device list. The user taps the mobile phone 121 in the connectable device list of the large-screen device 125, and the large-screen device 125 may establish the communication connection to the mobile phone 121.

After the large-screen device 125 establishes the communication connection to the mobile phone 121, the large-screen device 125 obtains application data, user data, and the like of the mobile phone 121, and displays, on "Super home screen", an application icon installed on the mobile phone 121. For example, in FIG. 1C-1 and FIG. 1C-2, the large-screen device 125 displays icons of applications such as AI life, Settings, Recorder, AppGallery, Gallery, and Videos that are installed on the mobile phone 121. After the user taps an application icon on "Super home screen" of the large-screen device 125, the mobile phone 121 may synchronize application data to the large-screen device 125 through the communication connection, and the large-screen device 125 performs display based on the data synchronized by the mobile phone 121, so that the user can use, through the large-screen device 125, an application installed on the mobile phone 121.

However, in a distributed device sharing scenario, when a user wants to share a terminal device owned by the user with another user, different accounts are logged in on the terminal device that the user needs to share and a terminal device of the another user. In this case, when a trusted communication connection is established between terminal devices on which the different accounts are logged in, the user needs to scan a two-dimensional code or enter a PIN code for device trusted authentication to ensure that the devices are trusted.

For example, in the "Super home screen" scenario shown in FIG. 1C-1 and FIG. 1C-2, the first user 12 may directly use, through the large-screen device 125, an application installed on the mobile phone 121. If the first user wants to share the large-screen device 125 with the second user 13, the large-screen device 125 is used as a shared device, and all terminal devices of the second user 13 are devices with a different account of the shared device. In other words, the first user 12 shares the large-screen device 125 with the second user 13, and the large-screen device 125 is a device that the first user 12 wants to share. For the shared device (namely, the large-screen device 125), the mobile phone 131, the smartwatch 132, the Bluetooth headset 133, and the like of the second user 13 are all devices with a different account, namely, terminal devices on which a different account is logged in.

If the second user 13 needs to use the large-screen device 125, the second user 13 needs to access the large-screen device 125 through a terminal device of the second user 13. It is assumed that the second user 13 wants to access the large-screen device 125 by using the mobile phone 131, to use, on the large-screen device 125, an application installed on the mobile phone 131. In this case, because the account of the first user 12 is logged in on the large-screen device 125, and the account of the second user 13 is logged in on the mobile phone 131, accounts logged in on the two devices are different, and the second user 13 cannot directly control the large-screen device 125 to access an application, data, and the like on the mobile phone 131. The second user 13 needs to scan, through the mobile phone 131, a two-dimensional code displayed on the large-screen device 125, or enter a PIN code displayed on the large-screen device 125, to complete device trusted authentication between the mobile phone 131 and the large-screen device 125, so that a trusted communication connection can be established between the mobile phone 131 and the large-screen device 125.

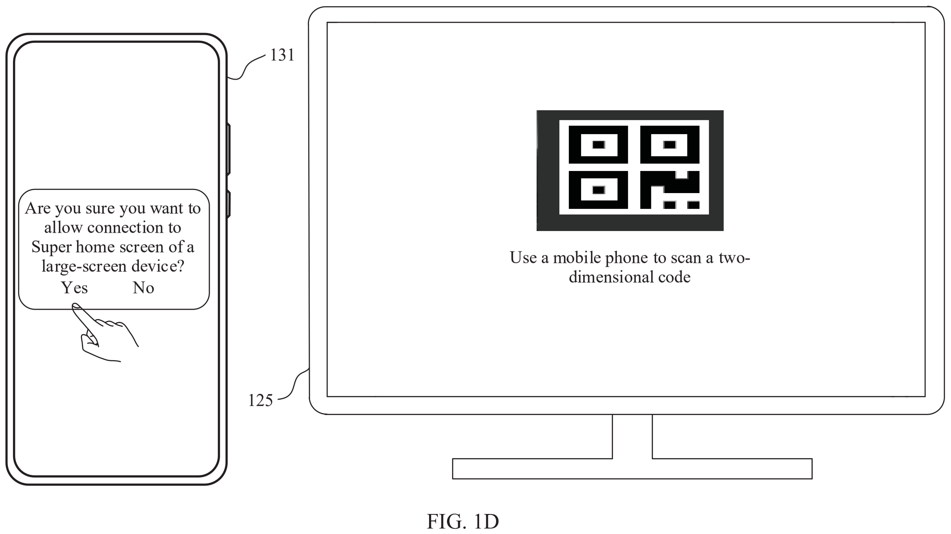

For example, FIG. 1D is a diagram of code scanning authentication according to an embodiment of this application. The mobile phone 131 and the large-screen device 125 enable Bluetooth and are connected to a same WLAN. The user turns on a switch of "Super home screen" on the mobile phone 131, and enters "Super home screen" on the large-screen device 125. After an option "Connect to another device" displayed on "Super home screen" is tapped, the large-screen device 125 displays the two-dimensional code shown in FIG. 1D on a screen. After the user scans the two-dimensional code on the screen of the large-screen device 125 through the mobile phone 131, the mobile phone 131 displays prompt information shown in FIG. 1D. The prompt information is used to prompt the user whether to allow connection to Super home screen of the large-screen device. If the user taps an option "Yes", the mobile phone 131 performs device authorization and authentication based on device information of the large-screen device 125 and the like carried in the two-dimensional code, and after the authorization and authentication succeeds, actively connects to the large-screen device 125 based on the device information of the large-screen device 125.

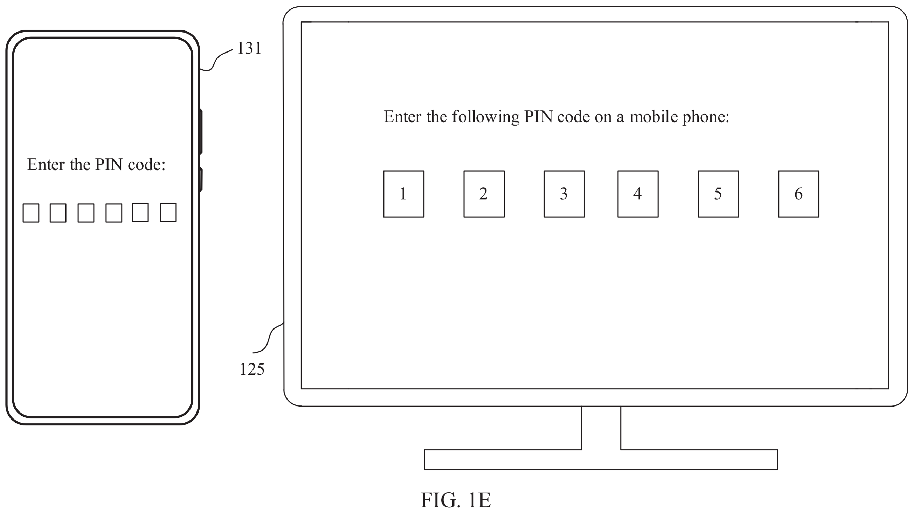

For another example, FIG. 1E is a diagram of entering a PIN code for authentication according to an embodiment of this application. Similar to FIG. 1D, after the user taps the option of "Connect to another device" displayed on "Super home screen" of the large-screen device 125, the large-screen device 125 displays the PIN code shown in FIG. 1E on the screen. The user enters the PIN code on the mobile phone 131, so that the mobile phone 131 and the large-screen device 125 perform device authorization and authentication, and establish a communication connection after the authorization and authentication succeeds.

After the mobile phone 131 establishes the communication connection to the large-screen device 125, the second user 13 may use, on the large-screen device 125, the application installed on the mobile phone 131, to implement a "Super home screen" service.

It can be learned from the foregoing that, when a user shares one or more terminal devices owned by the user with another user for use, the another user needs to perform device trusted authentication by scanning a code, entering a PIN code, or the like through a terminal device owned by the another user, so that a trusted communication connection can be established between the device with a different account and the shared device, and the another user can use the shared terminal device. In this case, a user operation procedure is cumbersome, and user experience is subpar.

In other words, in a device sharing scenario, a user of a device with a different account needs to perform an operation like scanning a code or entering a PIN code, to complete device trusted authentication between the device with the different account and a shared device. In this case, an operation is complex, and user experience is poor.

To resolve the foregoing problem that an operation is complex, and user experience is poor because in a process in which the device with the different account establishes the connection to the shared device, the user needs to perform device trusted authentication in a manner like scanning a code or entering a PIN code, an embodiment of this application provides a technical solution based on a device sharing system. A cloud server records device sharing information corresponding to a device sharing operation after a user performs the device sharing operation on a device side, where the device sharing information is used to represent a trusted authorization relationship between a shared device and a different account. After generating a device security credential based on the trusted authorization relationship, the cloud server sends the device security credential to the device side, to reflect the trusted authorization relationship on the cloud side based on the device security credential on the device side, so that trusted authorization and authentication can be performed between a device with the different account and the shared device based on a device security credential of the peer device. In a process of establishing a connection between the device with the different account and the shared device, a user of the device with the different account does not need to perform device trusted authentication by entering a PIN code, scanning a two-dimensional code, or the like. In this case, an operation is simpler, and user experience is better.

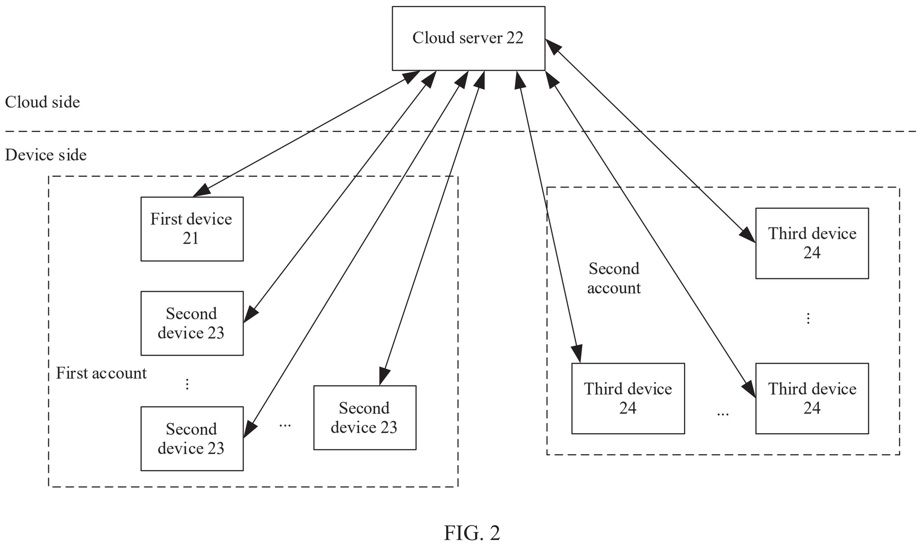

FIG. 2 is a block diagram of a device sharing system according to an embodiment of this application. The device connection system may include a first device 21, a cloud server 22, at least one second device 23, and at least one third device 24. A first account is logged in on the first device 21 and the at least one second device 23, a second account is logged in on the at least one third device 24, and the first account is different from the second account.

The first device 21, the second device 23, or the third device 24 may be but is not limited to an electronic device like a mobile phone, an intelligent wearable device (for example, smart glasses or a smart band), a vehicle-mounted device, an augmented reality (augmented reality, AR) device, a virtual reality (virtual reality, VR) device, a notebook computer, an ultra-mobile personal computer (ultra-mobile personal computer, UMPC), a netbook, or a personal digital assistant (personal digital assistant, PDA).

For example, in the scenario shown in FIG. 1A, both the first device 21 and the at least one second device 23 are terminal devices of the first user 12, and the first account is logged in on both the first device 21 and the at least one second device 23. In this case, the first device 21 is the mobile phone 121, and the at least one second device 23 includes the tablet 122, the computer 123, the smart speaker 124, the large-screen device 125, and the intelligent cockpit 126. The at least one third device 24 is a device of the second user 13, and may include the mobile phone 131, the smartwatch 132, and the Bluetooth headset 133.

The cloud server 22 may be a monolithic cloud server, or may be a cluster including a plurality of monolithic cloud servers. The monolithic cloud server may be a software module that provides a cloud service, or may be a physical device that provides a cloud service. In some embodiments, the cloud server 22 may include a home cloud, a device cloud, and a trust chain cloud. The home cloud may provide a smart home cloud service, for example, may manage various smart home devices. The device cloud may provide a device management cloud service. Generally, the device cloud stores an association relationship between an account and a device, and device information of each device. The trust chain cloud may provide cloud services such as device security credential generation, storage, and encryption.

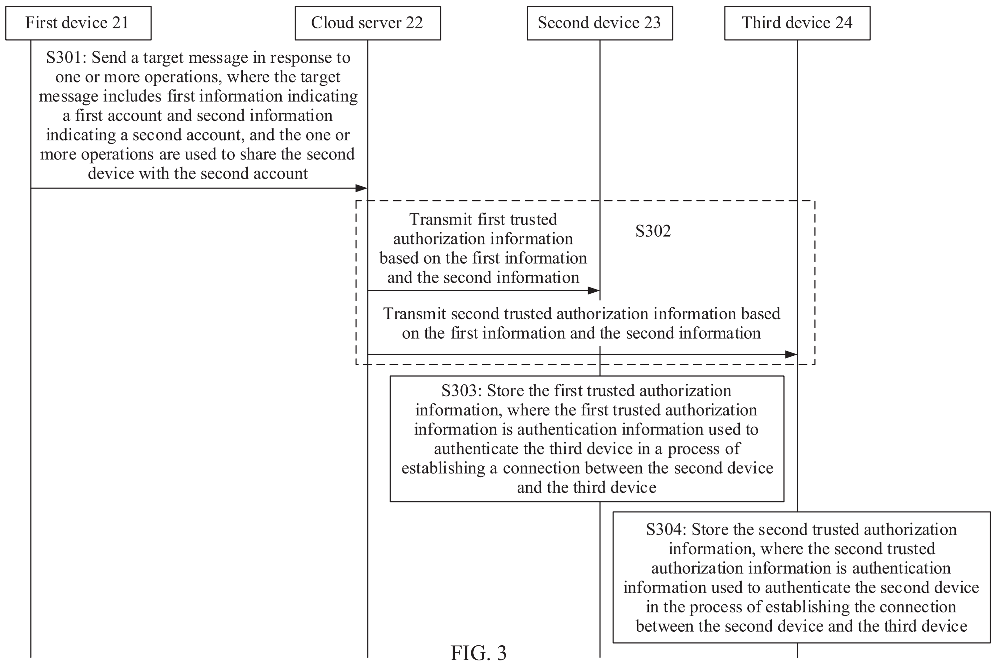

FIG. 3 is a flowchart block diagram of a device sharing method according to an embodiment of this application. The method may be applied to the device sharing system shown in FIG. 2. The method may include the following steps.

Step S301: The first device 21 sends a target message to the cloud server 22 in response to one or more operations, where the target message includes first information indicating a first account and second information indicating a second account, and the one or more operations are used to share the second device 23 with the second account.

A first operation is usually a device sharing operation entered by a user of the first device 21, and indicates to share at least one second device with the second account. The first operation may include a plurality of operations such as tapping, touching and holding, and selecting, to share the at least one second device with the second account.

In some embodiments, the one or more operations may be used to determine the second device from a plurality of devices on which the first account is logged in, to determine the shared device and a user with which the second device is shared. For example, the one or more operations may include an operation of determining the second device from the plurality of devices on which the first account is logged in, to determine the shared device. In this case, the shared device may be the second device 23, that is, one or more second devices 23 are selected from the plurality of devices on which the first account is logged in, and the one or more second devices are used as shared devices, and are shared with another user. The one or more operations may further include an operation used to determine the user with which the second device is shared. For example, the operation is an operation on a member sharing option or at least one piece of user information displayed on a shared member selection interface. Information about the second account may be obtained through the operation, to determine to share the one or more second devices 23 with the second account. In this way, the user may specify to share the one or more devices with the another user (namely, the second account), so that like a device with a same account, a device with a different account can seamlessly and conveniently use the shared device, and user experience is better.

For example, based on the scenario shown in FIG. 1A, the first user 12 shares the large-screen device 125 with the second user 13 through the mobile phone 121. In this case, FIG. 4A-1 to FIG. 4A-5 are diagrams of a device sharing process according to an embodiment of this application. Icons of applications are displayed on a home screen of the mobile phone 121, including but not limited to AI life 41, Settings, Recorder, AppGallery, Videos, Gallery, and the like. After the user taps an icon of AI life 41, the mobile phone 121 displays a "My home" interface 42 in response to the tap operation, and displays, on the "My home" interface 42, widgets of devices associated with the account of the first user 12. FIG. 4A-1 to FIG. 4A-5 show an example of a widget 43 of the large-screen device 125, a widget of a HUAWEI router, and the like, and the mobile phone 121 further displays a control 44.

In an implementation, the user may implement device sharing through the widget 43 of the large-screen device 125. Specifically, after the user touches and holds the widget 43 of the large-screen device 125, the mobile phone 121 displays a window 46 in response to the touch and hold operation. Two options: Share a device and Delete a device are displayed on the window 46. The user taps the option of Share a device on the window 46, to specify the large-screen device 125 as a shared device. The mobile phone 121 displays a shared member selection interface 47 in response to the tap operation on the option of Share a device on the window 46. A plurality of member sharing options such as an option of Share via scanning, an option of Share via a HUAWEI account, and an option of Share with a WeChat friend are displayed on the shared member selection interface 47, and accounts of a plurality of users (for example, accounts of Xiao Zhang, Xiao Wang, and Xiao Li) are further displayed on the shared member selection interface. The user may select a member sharing option and a shared member as required.

The option of Share via scanning indicates scanning a two-dimensional code of the other party's AI life to share. When the user taps the option of Share via scanning, the mobile phone 121 automatically invokes a camera in response to the tap operation, and displays a two-dimensional code scanning interface, to scan the two-dimensional code presented by the other party.

The option of Share via a HUAWEI account indicates sharing by entering a HUAWEI account or adding an account from Contacts. When the user taps the option of Share via a HUAWEI account, the mobile phone 121 displays an account entering interface in response to the tap operation, and the user enters, on the account entering interface, an account on which sharing needs to be performed, to share the large-screen device 125 with the second account.

In addition to device sharing performed through the option of Share via scanning, the option of Share via a HUAWEI account, or the option of Share with a WeChat friend, the user may select a plurality of user accounts displayed on the shared member selection interface 47, to share the large-screen device 125 with the one or more selected user accounts.

In this scenario, the one or more operations may include the touch and hold operation on the widget 43 of the large-screen device 125 and the operation of tapping the option of Share a device of the window 46, to select the large-screen device 125 as the shared device, and may further include a related operation on the shared member selection interface 47, for example, the operation of selecting the plurality of user accounts, the operation of tapping the option of Share via a HUAWEI account, an operation of entering a HUAWEI account, and the like. A fifth operation is used to determine the information about the second account. After determining the shared device and the second account, the mobile phone 121 sends the target message to the cloud server 22. In this case, the first information indicating the first account may include the information about the second device (for example, a device identifier of the large-screen device 125) or information about the first account, and the second information may include the information about the second account. If the first information includes the information about the second device, the cloud server 22 may obtain the information about the first account based on the information about the second device and an association relationship between a device and an account (or a user).

In another implementation, the user may alternatively implement device sharing through the control 44. Specifically, the user taps the control 44, and the mobile phone 121 displays a window 45 in response to the tap operation on the control 44. A plurality of options such as an option of Share a device, an option of Delete a device, and an option of Add a device are included in the window 45. The user taps the option of Share a device displayed on the window 45, and the mobile phone 121 displays the shared member selection interface 47 in response to the tap operation on the option of Share a device on the window 45. The user may select, based on the shared member selection interface 47, an account on which sharing needs to be performed, to share the large-screen device 125 with the second account.

In the scenario shown in FIG. 4A-1 to FIG. 4A-5, the second device 23 shared with the second account is the large-screen device 125, and the first operation may include operations such as touching and holding a widget or tapping a control, and account selection or entering. It may be understood that the first operation may indicate the first account to share the one or more second devices with the second account. For example, in the scenario in FIG. 1A, the first user 12 may enter the first operation to the mobile phone 121, to indicate to share the large-screen device 125 and the intelligent cockpit 126 with the second user 13 (namely, the second account).

In some other embodiments, the first device 21 displays a group member adding interface in response to an operation on a group member invitation control; and responds to an operation on a member invitation option or at least one piece of user information displayed on the group member adding interface, where the operation is used to determine a user invited to join a group. After the user invited to join the group is determined, a confirmation operation may be further input, to trigger the first device 21 to send the target message to the cloud server 22 (that is, send the target message to the cloud server in response to the user operation). In this case, the first information may include an identifier of a group owner or the information about the first account, the second information includes a member identifier of the invited user in the group or the information about the second account, and the group owner is the first account. The cloud server may obtain the information about the first account based on the identifier of the group owner, and obtain the information about the second account based on the member identifier. An account of the user invited to join the group is the second account, and the second device is a device in the group.

For example, the group is a family group. In this case, the user may create a family group and invite another user to join the family group, to share a device with the another user. In this case, an operation of inviting the another user to join the family group may be considered as a device sharing operation.

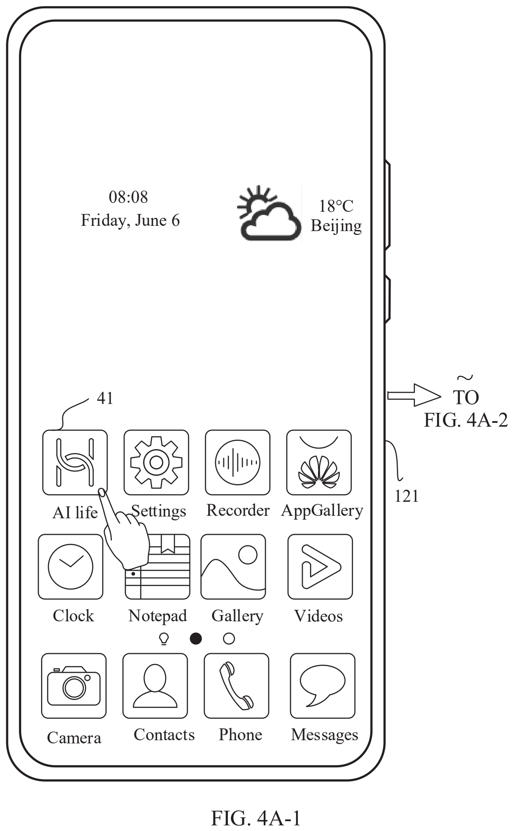

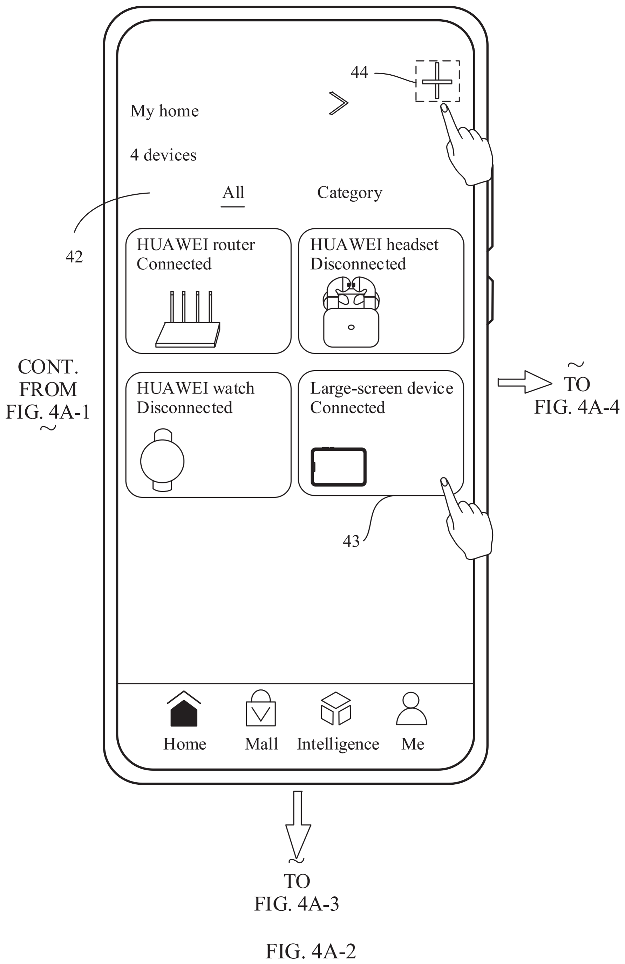

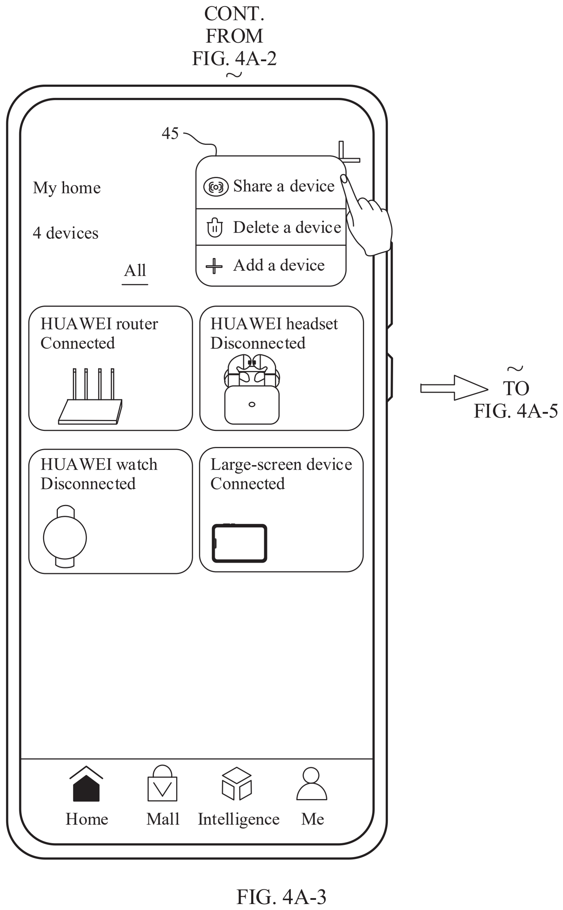

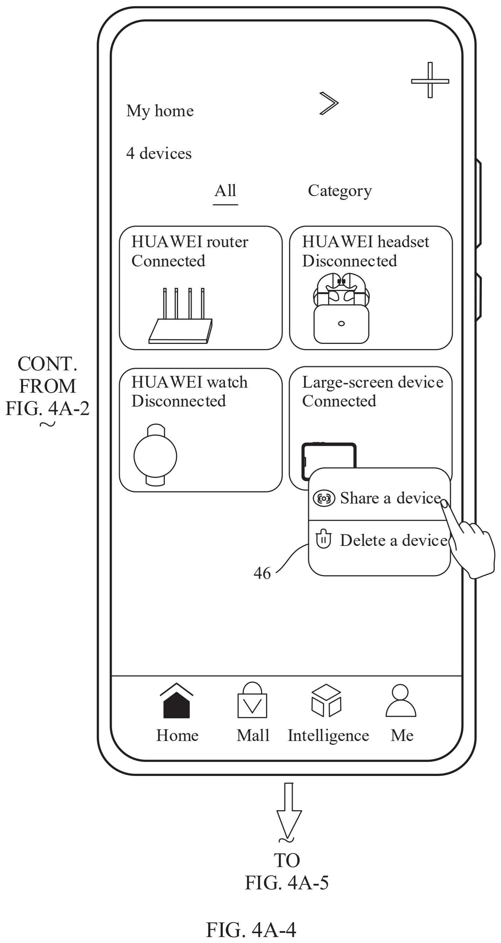

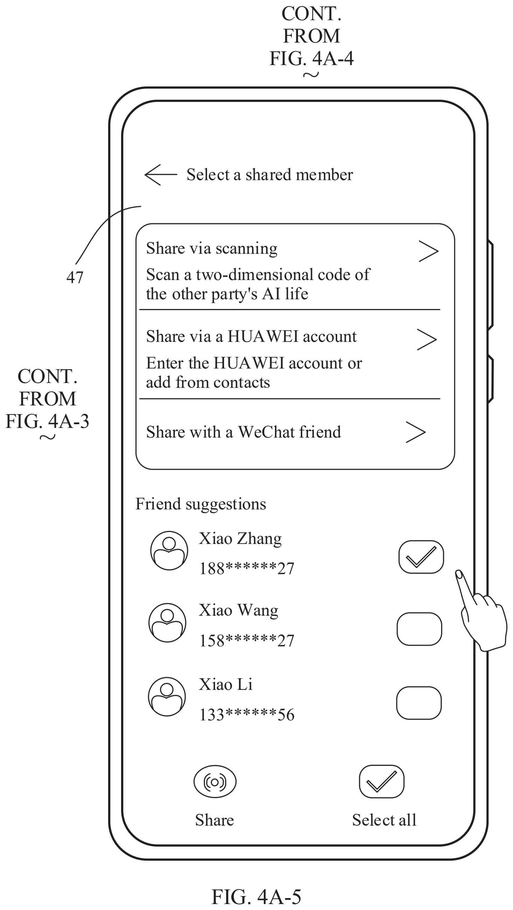

FIG. 4B-1 to FIG. 4B-5 are diagrams of a process of inviting a family group member according to an embodiment of this application. Based on the scenario in FIG. 4A-1 to FIG. A-5, after the mobile phone 121 displays a "My home" interface 42, the user taps a control 48 displayed on the interface, and the mobile phone 121 displays a window 49 in response to the tap operation on the control 48. A plurality of options such as a My home option, a Family management option, and an option of Create a new family are displayed on the window 49. After the user taps the family management option on the window 49, the mobile phone 121 displays a family management interface 410 in response to the tap operation.

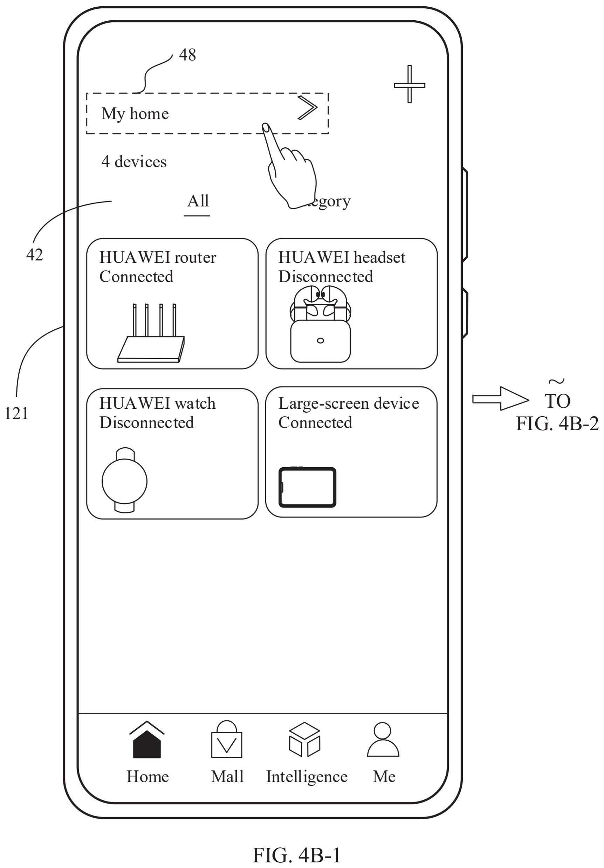

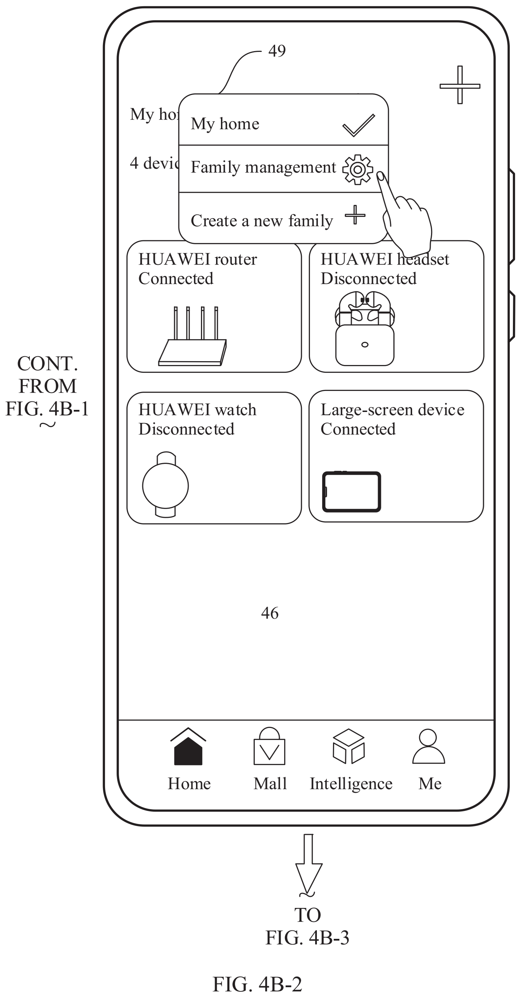

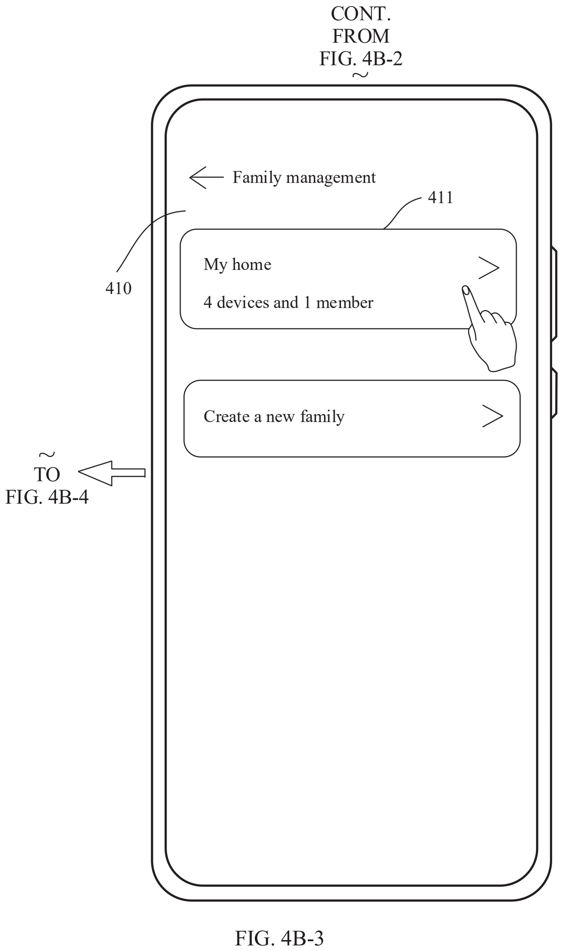

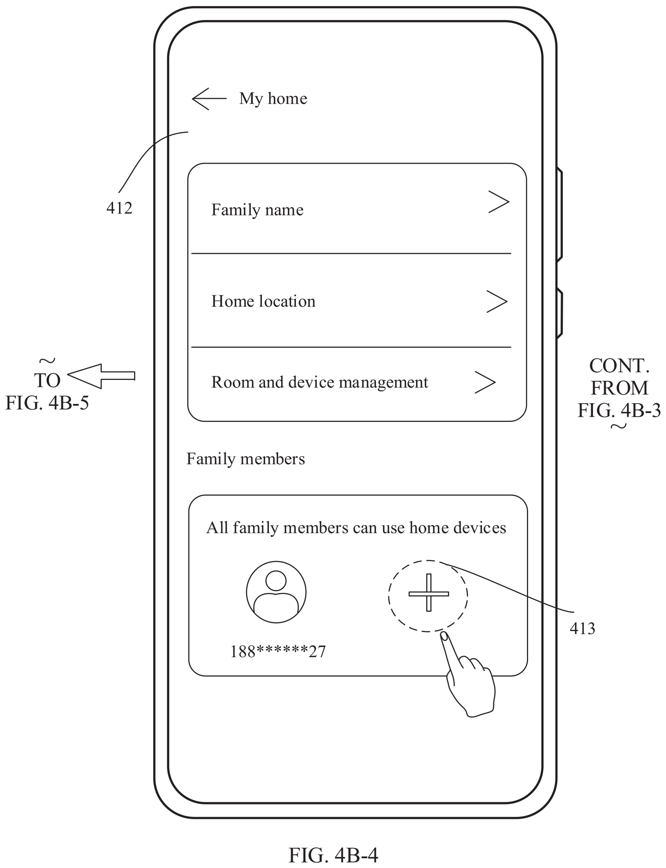

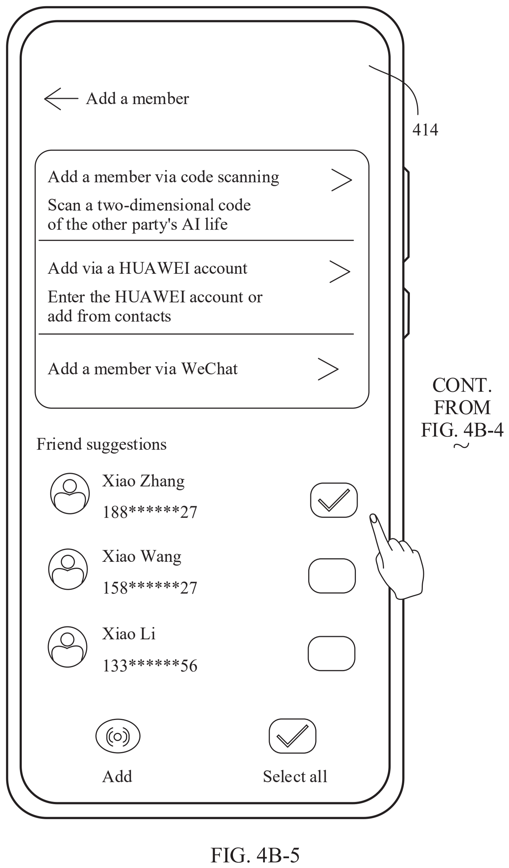

A control 411 is displayed on the family management interface 410. After the user taps the control 411, the mobile phone 121 displays an interface 412 in response to the tap operation. A family member adding control 413 is displayed on the interface 412. After the user taps the family member adding control 413, the mobile phone 121 displays a member adding interface 414 in response to the tap operation. A plurality of member adding options such as an option of Add a member via scanning, an option of Add a member via a HUAWEI account, and an option of Add a member via WeChat are displayed on the member adding interface 414, and account information of a plurality of users is further displayed. The user may send, based on the member adding interface 414, an invitation for joining the family to another user, to invite the another user to join the family group. In FFIG. 4B-1 to FIG. 4B-5, a group owner (owner) of the family group is an account 188******27. In this case, a second operation may include, for example, the tap operation on the control 413, and a third operation may include, for example, a related operation on the member adding interface 414, to determine the second account.

If the invited user agrees to the invitation, the invited user may become a member of the family group, and the member of the family group may use all or some devices in the family group. In this way, the group owner of the family group may invite another user to join the family group, to share all or some devices in the family group with the another user. For example, in the scenario shown in FIG. 1A, the first user 12 (namely, the first account) invites the second user 13 (namely, the second account) to join the family group through AI life on the mobile phone 121. In this case, the one or more operations may include a related operation (for example, tapping the family management option and tapping the family member adding control 413) used to initiate an invitation to the second account. The first operation indicates the first account to share one or more third terminal devices with the second account. In this case, the plurality of shared third terminal devices may include the tablet 122, the computer 123, the smart speaker 124, the large-screen device 125, and the intelligent cockpit 126.

It should be noted that, in a scenario in which a group is created, and an owner (owner) of the group invites another user to join the group, to share all or some devices in the group with the another user, the group is not limited to the family group shown in FIG. 4B-1 to FIG. 4B-5. For example, the first user 12 and the second user 13 are in a friend relationship. The first user 12 temporarily establishes a friend group, and invites the second user 13 to join the group.

It can be learned that the group owner may invite the another user (namely, the second account) to join the group, to share the device in the group with the another user (namely, the second account), so that sharing of a device in a group with a device with a different account is supported in a group scenario, and like a device with a same account, the device with the different account can seamlessly and conveniently use the device (namely, a shared device) in the group. In this way, user experience is better.

It should be noted that the user creates a family group, determines a device associated with the family group, and further determines that the device needs to be shared. The group owner requires another user to join the family group, and further determines a second account. In addition, after the family group is created and the device associated with the family group is determined, the user may further add or delete a device associated with the family group, to manage a device shared with the another user.

It should be noted that, in the foregoing example, an AI life application is used as an entry for device sharing, but the entry for device sharing is not limited to that mentioned above. This is not limited.

After the user enters one or more operations to the first device 21 to indicate the first account to share the at least one second device with the second account, the first device 21 sends the target message to the cloud server 22 in response to the one or more operations. The target message includes the first information indicating the first account and the second information indicating the second account, and further represents that the first account shares the at least one second device with the second account. In other words, the cloud server 22 may learn, based on the target message, of the second device shared by the first account with the second account. For example, in the device sharing scenario shown in FIG. 4A-1 to FIG. 4A-5, the target message sent by the mobile phone 121 to the cloud server may include the information about the second account (for example, an account number or an account name) and information about the large-screen device 125 (for example, an ID or the identifier of the large-screen device). In this way, the cloud server may learn, based on the target message, that the first account shares the large-screen device 125 with the second account, that is, learn of a trusted authorization relationship between the large-screen device 125 and the second account. For another example, in the family group device sharing scenario shown in FIG. 4B-1 to FIG. 4B-5, the target message may include the information about the second account (for example, a member ID of the second account in the family group) and the information about the first account (for example, a group owner ID of the family group). In this way, the cloud server may obtain a trusted authorization relationship between the device in the family group and the second account based on the target message.

In some embodiments, the first information may include information about a target second device, and the second information may include the information about the second account.

For example, the information about the second account is a user identifier of the second account, account information (for example, an account number) of the second account, or the member ID of the second account in the family group. In the family group scenario, after the invited user agrees to join the family group, a member ID in the group is assigned to the new family member to identify the family member. The information about the target second device may include a device identifier or a device name of the target second device. The target second device is one of the plurality of second devices, and the device is specified by the user to be shared with another user. For example, in the device sharing scenario in FIG. 4A-1 to FIG. 4A-5, when the user shares the large-screen device 125 with the second account, the mobile phone 121 uploads the device identifier, a device name, or the like of the large-screen device 125 to the cloud server. In this case, the target second device is the large-screen device 125.

In some other embodiments, the first information may include the information about the first account, and the second information may include the information about the second account. The information about the first account may include a user identifier of the first account, account information (for example, an account number of the first account) of the first account, or a unique ID of the first account in the family group. The information about the second account may include the user identifier of the second account, the account information (for example, the account number) of the second account, or the member ID of the second account in the family group. For example, in the family group scenario, the first account is an owner of the family group, the first account has an owner ID to which the first account belongs in the family group, and the second account is a member of the family group. After the user of the second account agrees to join the family group, the first device 21 uploads the owner ID and the member ID to the cloud server 22.

In some other embodiments, the first information may include the information about the first account and the information about the target second device, and the second information may include the information about the second account. The target second device is one or more devices specified by the user.

Step S302: The cloud server 22 transmits first trusted authorization information to the second device 23 and second trusted authorization information to the third device 24 based on the first information and the second information.

The first trusted authorization information includes information about association between a device identifier of the third device and a first device security credential 24, and the second trusted authorization information includes information about association between the device identifier of the second device and a second device security credential 23. The first device security credential is a device security credential of the third device, and the second device security credential is a device security credential of the second device.

The cloud server 22 may provide an account management capability and a device management capability, and may store a correspondence between each account and each device. All devices associated with an account may be found based on the account and the correspondence between the account and the device. In addition, device information of each device is further stored. The device information may include but is not limited to a device model, a device ID, a device name, device security level information, device version information, inherent device attribute information, and the like.

In some embodiments, the first information includes the information about the first account, and the second information includes the information about the second account. The cloud server 22 may find, based on the information about the first account, each second device associated with the first account, and obtain device information of the second device. For each second device, a second device security credential of the second device is generated based on the device information of the second device, and the second device security credential of the second device is associated with a device identifier of the second device, to establish an association relationship between the second device security credential and the device identifier of the second device. Finally, the second trusted authorization information is obtained based on the association relationship between the second device security credential of each second device and the device identifier of the second device. In other words, the second trusted authorization information may include information about association between a second device security credential and a device identifier of at least one second device.

After generating the second trusted authorization information, the cloud server 22 may obtain, based on the information about the second account, related information (for example, a communication address) of each third device associated with the second account, and further send the second trusted authorization information to one or more third devices based on the related information of the third device. It may be understood that the cloud server 22 may send the second trusted authorization information to all third devices, or may send the second trusted authorization information to some third devices, or may even send the second trusted authorization information to some specific third devices.

Similarly, the cloud server 22 may obtain, based on the information about the second account, each third device associated with the second account, and obtain device information of the third device. For each third device, a first device security credential of the third device is generated based on the device information of the third device, and the first device security credential is associated with a device identifier of the third device, to establish an association relationship between the first device security credential and the device identifier of the third device. Finally, the first trusted authorization information is obtained based on the association relationship of the third device. In other words, the first trusted authorization information may include information about association between a first device security credential and a device identifier of at least one third device.

After generating the first trusted authorization information, the cloud server 22 may obtain, based on the information about the first account, related information (for example, a communication address) of each second device associated with the first account, and further send the first trusted authorization information to one or more second devices based on the related information of the second device.

It should be noted that device security level information, device models, device version information, and inherent device attribute information that are of the second device and the first device are generally fixed, and do not change in a long time period. Based on the fixed information that does not change in a long time period, the generated device security credential may remain unchanged for a long time, and a process like a device security credential generation operation does not need to be frequently performed. However, if the device security credential is generated based on non-fixed information that changes in a short time, each time device information changes, the cloud server 22 needs to regenerate a device security credential based on the changed device information, and a device security credential generation process may need to be frequently performed.

In some other embodiments, the first information may include the information about the target second device, or include the information about the first account and the information about the target second device; and the second information may include the information about the second account. In this case, the cloud server 22 may obtain the information about the first account based on the correspondence between the account and the device and the information about the target second device. In addition, the second trusted authorization information is generated based on the information about the first account, and the first trusted authorization information is generated based on the information about the second account. For a specific process, refer to the foregoing descriptions. Details are not described herein again.

In specific application, when generating a device security credential based on device information, the cloud server 22 may sign the device information based on a public key infrastructure (Public Key Infrastructure, PKI) technology, to ensure security of transferring the device security credential to a maximum extent.

It should be noted that the cloud server 22 may generate a device security credential of each device in advance. After obtaining the target message, the cloud server 22 may find the second device security credential of the second device and the first device security credential of the third device based on the first information and the second information, and establishes an association relationship between the device security credential and a device identifier of the device. Alternatively, the cloud server 22 may generate an association relationship between a device security credential of each device and a device identifier in advance. After obtaining the target message, the cloud server 22 may find information about association between the second device security credential and the device identifier of the second device based on the first information and the second information, and information about association between the device identifier of the third device and the first device security credential.

Step S303: The second device 23 receives the first trusted authorization information from the cloud server 22, and stores the first trusted authorization information, where the first trusted authorization information is authentication information used to authenticate the third device in a process of establishing a connection between the second device and the third device.

Step S304: The third device 24 receives the second trusted authorization information from the cloud server 22, and stores the second trusted authorization information, where the second trusted authorization information is authentication information used to authenticate the second device in the process of establishing the connection between the second device and the third device.

The second device 23 and the third device 24 may authenticate, based on the locally stored device security credential of the peer device, whether the peer device is trusted. If the devices at the two ends are authenticated as trusted, the devices at the two ends may establish the trusted communication connection.

For example, after scanning wireless broadcast information sent by a surrounding device, the second device 23 locally reads each piece of first trusted authorization information; and for each piece of wireless broadcast information, determines, based on the first trusted authorization information, whether a device security credential corresponding to a device identifier carried in the wireless broadcast information is found. Specifically, for each piece of wireless broadcast information, the device identifier carried in the wireless broadcast information is compared with a device identifier of the first trusted authorization information, to determine whether device identifiers are consistent. If the device identifier carried in the wireless broadcast information is consistent with a device identifier in the first trusted authorization information, a device security credential corresponding to the device identifier is used as the device security credential corresponding to the device identifier of the wireless broadcast information, that is, it is determined that the device security credential corresponding to the device identifier carried in the wireless broadcast information is found. If each device identifier in the first trusted authorization information is inconsistent with the device identifier carried in the wireless broadcast information, it is determined that the device security credential corresponding to the device identifier carried in the wireless broadcast information is not found. The wireless broadcast information may be, for example, Bluetooth broadcast information or Wi-Fi broadcast information.

For each piece of wireless broadcast information, if the second device finds the device security credential corresponding to the device identifier of the wireless broadcast information, the second device determines that a device corresponding to the device identifier of the wireless broadcast information is a trusted device, and adds the device to a trusted device list. On the contrary, if the device security credential corresponding to the device identifier of the wireless broadcast information cannot be found, the second device determines that the device corresponding to the device identifier of the wireless broadcast information is an untrusted device. In this way, in a process of establishing a connection between a device with a different account and the shared device, the third terminal device (namely, the shared device) may perform trusted authentication on each second terminal device (namely, the device with the different account) based on a first correspondence.

In some embodiments, if the second device initiates a connection request to the third device, the second device obtains wireless broadcast information of the third device, where the wireless broadcast message of the third device includes the device identifier of the third device. If the first device security credential corresponding to the device identifier of the third device is found from the first trusted authorization information, it is determined that the third device is a trusted device, that is, the second device authenticates, based on the first trusted authorization information, that the third device is the trusted device. After determining that the third device is the trusted device, the second device may send the connection request to the third device. The connection request includes information such as the device identifier of the second device. The third device may query, from the second trusted authorization information, a device security credential corresponding to the device identifier carried in the connection request. If the corresponding device security credential is found, the third device determines that the second device is a trusted device, and establishes the trusted communication connection to the second device.

Similarly, if the third device initiates a connection request to the second device, the third device obtains wireless broadcast information of the second device, where the wireless broadcast information of the second device includes the device identifier of the second device. If the second device security credential corresponding to the device identifier of the second device is found from the second trusted authorization information, it is determined that the second device is a trusted device. That is, the third device 24 authenticates, based on the second trusted authorization information, that the second device is the trusted device. The second device determines, based on the first trusted authorization information, whether the device security credential of the third device is locally stored, to perform trusted authentication on the third device.

It may be understood that the first trusted authorization information includes a relationship between the device identifier of the third device and the first device security credential. When a device identifier of target wireless broadcast information (namely, one of the plurality of pieces of wireless broadcast information obtained through scanning) is the same as the device identifier in the first trusted authorization information, it is considered that a device sending the target wireless broadcast information is one of the at least one third device. The second device may identify the third device in the surrounding devices based on a correspondence between the device security credential and the device identifier. In addition, because the device security credential of the third device is locally stored, the second device further determines that authorization and authentication on the third device succeeds, identifies the third device as the trusted device, and initiates the connection to the trusted third device, to establish the communication connection to the trusted third device. The connection request sent by the second device to the third device carries the device information (for example, the device identifier) of the second device. After receiving the connection request, the third device determines whether the device security credential of the second device can be found from the second trusted authorization information, and if the device security credential of the second device can be found, the third device determines that the second device is trusted, and establishes the trusted communication connection to the second device.

It may be understood that there may be one or more third devices in an ambient environment of the second device. Therefore, the second device may identify one or more trusted third devices. When a trusted third device is identified, the second device may actively send a connection request to the trusted third device, to establish a communication connection to the trusted third device. Certainly, the second device may send the connection request to the trusted third device after receiving a trigger instruction of the user.

When a plurality of trusted third devices are identified, the second device may perform a user operation to send the connection request to a trusted third device specified by the user, to establish a connection to the specified trusted third device. Certainly, the second device may also actively send the connection request to all trusted third devices.

For example, FIG. 5 is a diagram of a Super home screen scenario according to an embodiment of this application. In a family group device sharing scenario, an owner of a family group wants to share a large-screen device 51 owned by the owner with another member of the family group, and an account of the owner is logged in on the large-screen device 51. The owner invites two users Xiao Ming and Jack@mail.com to join the family group through the process shown in FIG. 4B-1 to FIG. 4B-5. For each of the two users, the cloud server 22 generates first trusted authorization information of a user account, and sends the first trusted authorization information to the large-screen device 51. The cloud server 22 further generates second trusted authorization information of the large-screen device, and sends the second trusted authorization information to each device under the two user Xiao Ming and Jack@mail.com. In this way, the large-screen device 51 stores device security credentials of devices of the two users Xiao Ming and Jack@mail.com, and the devices of the two users Xiao Ming and Jack@mail.com store a device security credential of the large-screen device 51. The large-screen device 51, a mobile phone of Xiao Ming, and a mobile phone of Jack@mail.com all enable a Bluetooth function. The large-screen device 51, the mobile phone of Xiao Ming, and the mobile phone of Jack@mail.com send wireless broadcast information to the outside. The large-screen device 51 obtains wireless broadcast information in an ambient environment through scanning, authenticates, based on the locally stored first trusted authorization information, that Mate 30 Pro and P50 of Xiao Ming and Mate 40 Pro of Jack@mail.com are trusted, and displays a plurality of mobile phones in a connectable device list 53 of Super home screen 52. Similarly, Mate 30 Pro and P50 of Xiao Ming and Mate 40 Pro of Jack@mail.com also perform device trusted authentication on the large-screen device 51 based on the second trusted authorization information.

The user may tap a device in the connectable device list 53 according to a requirement, to specify a terminal device to which a connection request is sent. In response to the tap operation, the large-screen device 51 sends the request to the connectable device tapped by the user. For example, the user taps an option of Mate 30 Pro of Xiao Ming in the connectable device list 53, and the large-screen device 51 sends the connection request to Mate 30 Pro of Xiao Ming, to establish a communication connection to the device.

It should be noted that, in the scenario shown in FIG. 5, when the large-screen device 51 is shared with only one user, that is, the owner shares the large-screen device 51 with only Xiao Ming, and only Xiao Ming is invited to join the family group. The large-screen device 51 identifies the two trusted devices of Xiao Ming, and displays the devices in the connectable device list 53 for the user to select. In addition, when the large-screen device 51 is shared with at least two users, that is, the owner shares the large-screen device 51 with Xiao Ming and Jack@mail.com, Xiao Ming and Jack@mail.com are invited to join the family group. In this case, the large-screen device 51 may identify a trusted device of each user, and display the device in the connectable device list 53 for the user to select.

It should be noted that, in the scenario in FIG. 5, when displaying the connectable device list, the large-screen device 51 displays device information (for example, a device name), and displays user information (for example, Xiao Ming) of each device, that is, displays a user to which each device belongs. In this case, the large-screen device 51 locally stores a correspondence between the user information (for example, a user identifier) and the device information. The user to which each device belongs and the user information may be found based on the correspondence, and the device information and the user information are spliced to obtain display information including the device information and the user information for display in the connectable device list. In this way, user experience is better.

It may be understood that, in a distributed scenario, to ensure security of a connection between a plurality of devices and implement secure hopping of user data, application data, and the like between the devices, it usually needs to be ensured that the devices are appropriate and trusted to each other. To be specific, a trust relationship is established between the devices, and after the trust relationship is verified, a secure connection channel is established to implement secure transmission of the user data and the application data. However, for devices on which different accounts are logged in, if trusted authentication is performed by scanning a code or entering a PIN code, and then a trusted connection is established, user experience is poor.

In embodiments of this application, when the user inputs, to the first device 21, the first operation indicating to share the second device with the second account, it may be considered that the second device and the second account are authorized to be trusted. After the first terminal device sends the target message to the cloud server in response to the first operation, the cloud server learns, based on the target message, that there is a trusted authorization relationship between the second device and the second account, generates the information about association between the device identifier of the second device and the second device security credential and the information about association between the device identifier of the third device and the first device security credential and the device identifier based on the trusted authorization relationship, and performs corresponding transmission to the second device and the third device, to reflect a trusted authorization relationship on the cloud side based on a device security credential on the device side. In this way, the second device (namely, a shared device) and the third device (namely, a device with a different account) may authenticate, based on the device security credential of the peer device, whether the peer device is trusted. The user of the device with the different account does not need to perform device trusted authentication by entering a PIN code, scanning a two-dimensional code, or the like. Therefore, an operation is simpler, and user experience is better. For example, in a group device sharing scenario, according to the device sharing solution in embodiments of this application, after the second account determines to join a group, the user of the second account may use, through a device on which the second account is logged in, a device that is in the group and on which the first account is logged in, so that the user of the second account can obtain same experience or similar experience as the user of a same account (namely, the first account). This improves user experience of the second account.

It should be further noted that, a user of a device with a different account performs trusted authentication by entering a PIN code, scanning a two-dimensional code, or the like, the shared device cannot automatically discover the device with the different account in a process of establishing a connection between the device with the different account and a shared device, and a user needs to manually add the device with the different account. In addition, each time the shared device establishes a connection to the device with the different account, the user needs to repeatedly enter the PIN code, scan the two-dimensional code, or the like. In other words, from the user's perspective, this results in a repetitive authentication process for each use.

However, in embodiments of this application, the shared device (namely, the second device) may actively discover, based on the correspondence between the device identifier and the device security credential, the user to which the device with the different account belongs by determining whether the device identifier carried in the wireless broadcast information is the same as the device identifier in the trusted authorization information. In addition, the shared device and the device with the different account may persistently store the trusted authorization information. Therefore, in each process of establishing a connection, device trusted authentication may be performed based on the stored trusted authorization information. From the user's perspective, repeated authentication does not need to be performed each time.

As described above, the cloud server 22 may generate the first trusted authorization information and the second trusted authorization information based on the first information and the second information, transmit the first trusted authorization information to the second device, and transmit the second trusted authorization information to the third device.

Certainly, in addition to transmitting the first trusted authorization information to the second device, the first trusted authorization information may be transmitted to the first device, or transmitted to all devices associated with the first account. All devices associated with the first account include the first device and each second device. In this way, the second device may perform device trusted authentication on the third device based on the first trusted authorization information, and the first device may also perform device trusted authentication on the third device based on the first trusted authorization information, to implement a cross-device service (for example, Super home screen, a Distributed photo album, or Super device) with each third device 24. In this case, the second trusted authorization information further includes an association relationship between a device identifier of the first device and a third device security credential.

For example, when the first information includes the information about the second device or the target second device, and the second information includes the information about the second account, the cloud server 22 searches for the information about the first account based on the association relationship between the account and the device and the information about the target second device or the second device, obtains device information of the first device and device information of each second device based on the information about the first account, generates information about association between the device identifier of the first device and the third device security credential based on the device information of the first device, generates information about association between a device identifier of each second device and a second device security credential based on the device information of the second device, and generates the second trusted authorization information based on the information about association between the device identifier of the second device and the second device security credential and the information about association between the device identifier of the first device and the third device security credential. The second trusted authorization information is transmitted to the third device, and the third device may perform automatic discovery and device trusted authentication on the first device based on the information about association between the device identifier of the first device and the third device security credential in the second trusted authorization information, and perform automatic discovery and device trusted authentication on the second device based on the information about association between the device identifier of the second device and the second device security credential in the second trusted authorization information.

Similarly, the cloud server 22 generates the first trusted authorization information based on the information about the second account, and transmits the first trusted authorization information to the first device and the second device.

In this way, a trusted communication connection may be established between the first device and the third device after the first device and the third device authenticate, based on the device security credential, that the peer device is trusted, to implement a cross-device service between the first device and the third device. A trusted communication connection may also be established between the second device and the third device after the second device and the third device authenticate, based on the device security credential, that the peer device is trusted, to implement a cross-device service between the second device and the third device.

To better describe the device sharing process, the following descriptions are given with reference to a flowchart block diagram of a device sharing method according to an embodiment of this application shown in FIG. 6A and FIG. 6B. As shown in FIG. 6A and FIG. 6B, the method may include the following steps.

Step S601: The first device 21 sends a target message to the cloud server 22 in response to a first operation, where the target message includes first information indicating a first account and second information indicating a second account, and the first operation is used to share the second device 23 with at least one second account.

It should be noted that a user may share a device with a single user or a plurality of users. For example, in a family group device sharing scenario, an owner may require a plurality of users to join a family group, so as to share a device in the family group with the plurality of users. When the device is shared with the at least one second account, step S602 to step S607 are performed for each second account. In this way, the second device (namely, a shared device) stores a correspondence between a device security credential of each second account and a device identifier, autonomously discovers, based on the correspondence between the device security credential of the second account and the device identifier, a terminal device associated with each second account, and performs trusted authentication. For example, refer to the scenario shown in FIG. 5. Both Xiao Ming and Jack@mail.com are second accounts, and the large-screen device 51 may identify trusted devices of Xiao Ming and Jack@mail.com.

Step S602: The cloud server 22 obtains first trusted authorization information and second trusted authorization information based on the first information and the second information.

The second trusted authorization information includes information about association between a device identifier of the first device and a third device security credential, and information about association between a device identifier of the second device and a second device security credential. The first trusted authorization information includes information about association between a device identifier of the third device and a first device security credential.

It should be noted that the first trusted authorization information and the second trusted authorization information may be generated in advance, or may be generated in real time. For a specific generation process, refer to the foregoing related content. Details are not described herein again.

The first trusted authorization information is authentication information used to authenticate the third device in a process of establishing a connection between the second device and the third device, and the second trusted authorization information is authentication information used to authenticate the second device in the process of establishing the connection between the second device and the third device. The second trusted authorization information is also authentication information used to authenticate the first device in a process of establishing a connection between the first device and the third device.

Step S603: The cloud server 22 sends the first trusted authorization information to the first device 21.

Step S604: The cloud server 22 sends the first trusted authorization information to the second device 23.

Step S605: The cloud server 22 sends the second trusted authorization information to the third device 24.

Step S606: The first device 21 performs device trusted authentication on the third device 24 based on the first trusted authorization information.

Step S607: The second device 23 performs device trusted authentication on the third device 24 based on the first trusted authorization information.

Step S608: The third device 24 performs device trusted authentication on the first device 21 and the second device 23 based on the second trusted authorization information.

Step S609: Trusted authentication between the first device 21 and the third device 24 succeeds, and a trusted communication connection is established.

For example, if the first device 21 initiates a connection request to the third device 24, the first device 21 obtains the wireless broadcast information of the third device 24, where the wireless broadcast message of the third device includes the device identifier of the third device; and if the first device security credential corresponding to the device identifier of the third device 24 is found from the first trusted authorization information, determines that the third device 24 is a trusted device. After determining that the third device 24 is trusted, the first device 21 may send the connection request to the third device 24, where the connection request carries device information (for example, the device identifier) of the first device 21. After receiving the connection request, the third device determines whether the device security credential of the first device can be found from the second trusted authorization information; and if the device security credential of the first device can be found, determines that the first device is trusted, and establishes a trusted communication connection to the first device.

For example, in a Super device service scenario, if the first device 21 needs to obtain related information of each third device, the first device 21 may perform processes such as automatic discovery, trusted authentication, and automatic connection initiation based on the first trusted authorization information, to establish a trusted communication connection to the third device.

Step S610: Trusted authentication between the second device 23 and the third device 24 succeeds, and a trusted communication connection is established.

It can be learned from the foregoing that the information about association between the device identifier of the second device and the second device security credential is generated, the information about association between the device identifier of the first device and the third device security credential is also generated, the second trusted authorization information including these two pieces of association information is transmitted to the third device, and the first trusted authorization information is transmitted to the first device and the second device, so that each device associated with the first account stores a device security credential of a device associated with the second account, and the device associated with the second account also stores a device security credential of the device associated with the first account. Devices associated with two accounts may perform automatic discovery and trusted authentication on a device with a different account based on a local device security credential, and establish a trusted communication connection, to implement a cross-device service between devices with different accounts. An operation is simple, so that a user can obtain use experience as using a device with a same account, and user experience is better.

For example, refer to a diagram of a device sharing scenario shown in FIG. 7A. The first account is logged in on the first device and the second device, and the second account is logged in on the third device. The first device sends the target message to the cloud server in response to the first operation. The cloud server sends the first trusted authorization information to the second device and the second trusted authorization information to the third device based on the target message. The second device performs trusted authentication on the third device based on the first trusted authorization information, and the third device performs trusted authentication on the second device based on the second trusted authorization information. After trusted authentication on two ends succeeds, the second device and the third device establish a trusted communication connection, to perform a cross-device service.

Further, the cloud server may further transmit the first trusted authorization information to the first device. In this case, the second trusted authorization information further includes the information about association between the device identifier of the first device and the third device security credential. The first device performs trusted authentication on the third device based on the first trusted authorization information, and the third device performs trusted authentication on the first device based on the second trusted authorization information. After trusted authentication on two ends succeeds, the first device and the third device establish a trusted communication connection, to perform a cross-device service.

It should be noted that the first device may also use the first device as a shared device, and share the first device with another user. In this case, the second device and the first device may be a same device. In response to the first operation, the first device shares the first device with the second account, and sends the target message to the cloud server. The cloud server transmits the first trusted authorization information to the first device and the second trusted authorization information to the third device based on the target message. After the first device and the third device perform trusted authentication on devices at the two ends based on the first trusted authorization information and the second trusted authorization information, the trusted communication connection is established.

It should be further noted that, after the cloud server 22 sends trusted authorization information to a terminal device, the terminal device may perform device trusted authentication on a device with a different account based on the trusted authorization information. For example, a first target device receives the trusted authorization information from the cloud server, where the trusted authorization information includes information about association between a device identifier of a second target device and a device security credential, the first account is logged in on the first target device, the second account is logged in on the second target device, and the first account is different from the second account.

The first target device obtains at least one piece of wireless broadcast information obtained through scanning; if a device security credential corresponding to a device identifier in target wireless broadcast information is found based on the trusted authorization information, determines that a device corresponding to the target wireless broadcast information is a trusted second target device, where the target wireless broadcast information is one piece of broadcast information in the at least one piece of wireless broadcast information; and establishes a communication connection to the trusted second target device. In other words, a trusted authorization relationship on the cloud side is reflected by the device security credential on the device side, so that device trusted authentication can be performed on two devices with different accounts based on a device security credential on the peer end. Further, the trusted authorization information may not be generated based on a device sharing operation. In other words, embodiments of this application may not be applied to a device sharing scenario. Device trusted authentication may be performed on any two devices with different accounts based on a locally stored peer device security credential.

To better describe a device sharing process, the following describes the process with reference to a diagram of a device sharing process in a family group according to an embodiment of this application shown in FIG. 7B.

In a family group device sharing scenario, a family group is created by an owner user. After the user creates the family group, a terminal device generates a group (Group) ID, and sends the group ID to a home cloud. For example, refer to the diagram of the scenario shown in FIG. 4B-1 to FIG. 4B-5. The user may tap the option of Create a new family on the window 49, or tap the option of Create a new family on the family management interface 410, to create a new family group. The mobile phone 121 sends related information to the home cloud in response to the family group creation operation of the user, and the home cloud allocates a group ID to the family group, and records an association relationship between the group ID and a user account or a user ID.

Each time a user is added to the family group, a member (member) ID is allocated to the new member. There are a plurality of terminal devices in the family group, and each device in the family group has a device ID.

As shown in FIG. 7B, in this scenario, a system architecture may include an account family, the home cloud, a device cloud, a trust chain cloud, a device 1, a device 2, and a device 3. An account A is logged in on the device 1 and the device 3, and an account B is logged in on the device 2. The account A is different from the account B. The device 1 and the device 3 are devices of the owner user, and the device 2 is a device of a family group member.

Both the device 1 and the device 2 include an AI life application, a HiLink service, a soft bus, and trusted authorization relationship data. The device 3 includes a HiLink service or a credential authorization service and trusted authorization relationship data. The device 1 and the device 2 may be, for example, mobile phones, and the device 3 is, for example, a large-screen device.

The account family, the home cloud, the device cloud, and the trust chain cloud are all on the cloud side. The trust chain cloud may provide a capability of generating a device security credential and an interface for querying the device credential, store various device security credentials, and encrypt the device security credentials. In other words, the trust chain cloud may generate a device security credential based on device information provided by the device cloud, and establish a correspondence between the device security credential and a device identifier. After the device security credential is generated, the device security credential is persistently stored, and a query interface is provided externally. The device cloud may find, based on the device identifier (for example, a device ID), the device security credential corresponding to the device identifier.

The device cloud may provide a capability of maintaining a relationship between a device and a user and an interface for notifying an authorization relationship. The device cloud stores a device associated with each account, device information of each device, and the like. The device cloud usually stores a relationship (namely, a DeviceId-Uid relationship) between a device ID and a user ID or a user account.

The home cloud (or smart home cloud) may provide an interface for Push, MQTT, and message center notification, obtaining a member of the account family, adding a family member, requesting an authorization relationship, and notifying the device cloud of an authorization relationship. To be specific, the home cloud may associate accounts of users, manage a family group, receive information about each terminal device, and send a notification, information, or the like to each terminal device. The account family may be considered as a specific data structure stored in the home cloud, and is an abstract concept. The home cloud can synchronize family group information of the user account. That is, the home cloud synchronizes members from the account family. After a new member is added to the account family, the home cloud is notified. The AI life application obtains the new member of the account family from the home cloud.

As shown in FIG. 7B, a procedure of sharing a device in the family group may include the following steps.
1. Add a family member. The owner user invites the account B to join the family group on the AI life application of the device 1. For a process of inviting a user to join the family group, refer to FIG. 4B-1 to FIG. B-5. Details are not described herein again. In response to the operation of adding the family member by the owner user, the device 1 sends related information to the home cloud. The related information may include a family group ID and a user ID (Uid) of the member. In this scenario, the operation that is of adding the family member and that is entered by the owner user on the device 1 may be considered as an operation of sharing a device with the account B, and a group ID, a user ID of a member, and the like that are sent by the device 1 to the home cloud may be considered as the target message.
2. The home cloud pushes or feeds a notification to the member for authorization confirmation. In other words, the home cloud sends an invitation notification message to the AI life application of the device 2 in a push manner, a feed manner, or the like based on the user ID that is of the member and that is uploaded by the device 1, for a user of the device B to determine whether to join the family group.
3. Member authorization confirmation. After the member B confirms, on the AI life application of the device 2, to join the family group, the device 2 returns, to the home cloud, a response message for confirming to join the group, to notify the home cloud that the member B confirms to join the family group. After receiving the confirmation message fed back by the device 2, the home cloud allocates a member ID to the account B, and records a sharing relationship (or referred to as an authorization relationship), to record a trusted authorization relationship between each device under the account B and each device under the account A.
4. After responding to the confirmation message returned by the device 2, the home cloud transmits Ownerld, the member ID, DevIds, and the like to the device cloud. Ownerld may be used to find, based on the group ID, a device associated with the owner user. DevIds may be device IDs of all devices associated with the account A, or may be a device ID under the account A, for example, a device ID of the device 3 herein. In other words, the home cloud synchronizes a relationship between the owner, the member, and DevIds of an authorized device to the device cloud.
5. The device cloud obtains device information of the device 1, the device 2, and the device 3 based on Ownerld, the member ID, DevIds, and the like, and sends the device information of the device 1, the device 2, and the device 3 to the trust chain cloud. The trust chain cloud generates DevId credentials (namely, a correspondence between device security credentials and device identifiers) of the device 1, the device 2, and the device 3 based on the device information, and provides a query interface for the device cloud to query. The device cloud may find the DevId credentials of the device 1, the device 2, and the device 3 from the trust chain cloud based on device IDs.
   The device cloud obtains the DevId credentials of the device 1, the device 2, and the device 3, and pushes a notification to the home cloud. The notification may include DevId and a push notification, or Uid and a push notification, to notify the home cloud of a device to which the home cloud sends the trusted authorization relationship or indicate the device to query the trusted authorization relationship.
6. The home cloud sends authorization relationship data to the device 2 and the device 3 based on the push notification of the device cloud, or notifies the device 2 and the device 3 to actively query the authorization relationship data. Certainly, the home cloud may alternatively send the authorization relationship data to the device 1, or the device 1 may obtain the authorization relationship data from the device 3 based on a distributed data synchronization technology.

After obtaining the authorization relationship data, the device 1, the device 2, and the device 3 may flush the authorization relationship data to a disk (that is, locally store the authorization relationship data). Authorization relationship data of the device 1 and authorization relationship data of the device 3 are the same, and may include Uidlist. Uidlist includes DevIdlist and Udidlist that correspond to Uid. Authorization relationship data of the device 2 is DevInfolist (DeviId and Udid). Uid is a user ID, and DevId (a device ID) is a number in an environment. When a device is deleted or added, the device ID changes. Udid is a unique identifier of a device in an entire network. Udid does not change when the device is deleted or added. Generally, a device identifier includes a device ID and Udid of a device. DevIdlist in FIG. 7B includes a device security credential usually including a series of security certificates, security identifiers of devices, and the like.

In FIG. 7B, the device 2 stores a correspondence between device identifiers of the device 1 and the device 3 and device security credentials, and the device 3 stores a correspondence between a device identifier of the device 2 and a device security credential.

The device 3 may autonomously discover the device 2 based on the trusted authorization relationship data, perform trusted authentication on the device 2, and establish a trusted communication connection to the device 2. Similarly, the device 2 may autonomously discover the device 1 and the device 3 based on the trusted authorization relationship data, perform trusted authentication on the device 1 and the device 3, and establish trusted communication connections to the device 1 and the device 3.

In the scenario shown in FIG. 7B, the owner of the family group may share a device in the group with another group member, to support synchronization of the device security credential.

In some embodiments, after device sharing, the user may cancel device sharing. In this case, the first device 21 may send a sharing cancellation instruction to the cloud server 22 in response to the device sharing cancellation operation. The device sharing cancellation operation is used to cancel sharing of the second device with the second account, and the sharing cancellation instruction instructs to cancel sharing of the second device with the second account.

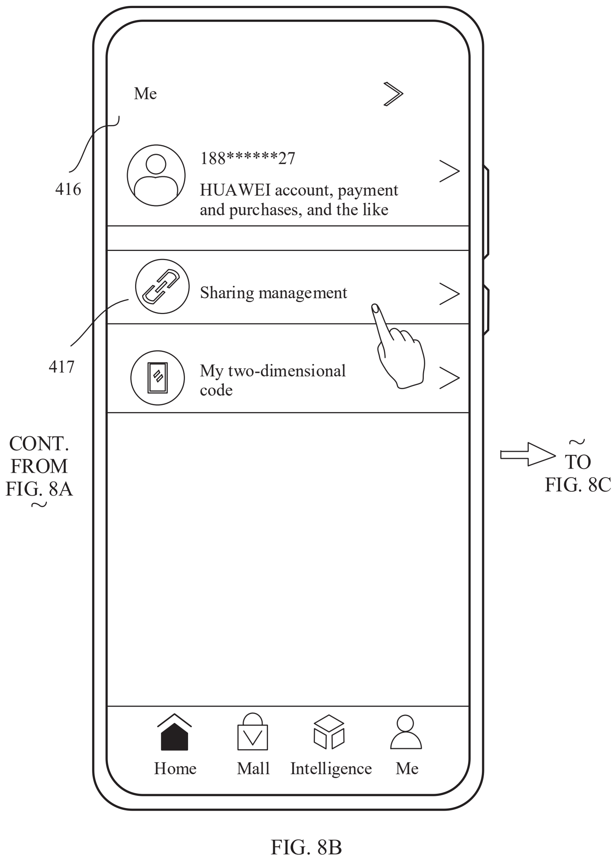

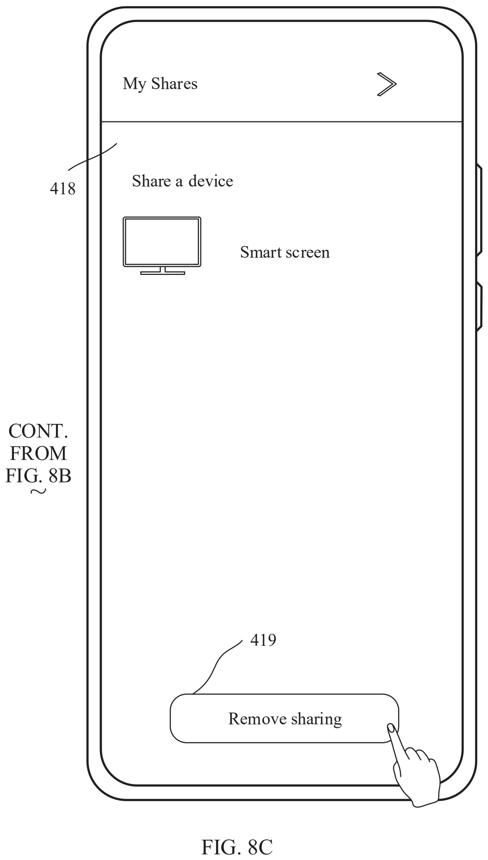

For example, FIG. 8Ato FIG. 8C are diagrams of a device sharing cancellation scenario according to an embodiment of this application. Based on the device sharing scenario shown in FIG. 4A-1 to FIG. 4A-5, a "Me" control 415 is displayed on the "My home" interface 42 of the mobile phone 121. After the user taps the "Me" control 415, in response to the tap operation, the mobile phone 121 displays an interface 416, and a sharing management option 417 is displayed on the interface 416. After the user taps the sharing management option 417, the mobile phone 121 displays an interface 418 in response to the tap operation. Information about a device currently shared by the account and a remove sharing control 419 are displayed on the interface 418. After selecting one or more devices whose sharing needs to be canceled, the user taps the remove sharing control 419, to cancel sharing of the selected devices. In this case, a sixth operation may include an operation of tapping the remove sharing control 419, or include a plurality of operations such as tapping the sharing management option 417 and tapping the remove sharing control 419.

After receiving the sharing cancellation instruction of the first device 21, in response to the sharing cancellation instruction, the cloud server 22 deletes an authorization relationship between the second account and the second device, and sends a first deletion instruction to the second device and a second deletion instruction to the third device, where the first deletion instruction instructs the second device to delete the stored first trusted authorization information, and the second deletion instruction instructs the third device to delete the stored second trusted authorization information.

It may be understood that, if the cloud server 22 sends the first trusted authorization information to the first device 21 during device sharing, the cloud server 22 may also send a deletion instruction to the first device 21, to instruct the first device 21 to delete the locally stored first trusted authorization information.

In this way, when the user of the first device 21 cancels device sharing, the trusted authorization information of the cloud server and a device security credential stored in the terminal device may be deleted in time.

The user may cancel device sharing when a device goes offline, and the cloud server 22 cannot instruct, in time, the offline terminal device to delete a local device security credential. In this case, if the first device, the second device, or the third device is powered off and then powered on again, the first device, the second device, or the third device may send a query instruction to the cloud server, and then receive response information returned by the cloud server for the query instruction. The query instruction is used to query whether the device sharing relationship is updated. In this way, it can be avoided that the device sharing relationship cannot be updated in time after the device sharing relationship changes (for example, sharing is canceled) during power-off. When the response information indicates that the device sharing relationship changes, and sharing of the device is canceled, the terminal device deletes the locally stored trusted authorization information in time. For example, in the scenario shown in FIG. 7B, after the device 1, the device 2, or the device 3 is powered on again, the device 1, the device 2, or the device 3 may send a query instruction to the cloud side, where the query instruction carries a device ID, so that the cloud side performs a pull operation again based on the device ID, to obtain information such as the device security credential and the device identifier.

As described above, according to the device sharing solution provided in embodiments of this application, the terminal device may locally store the correspondence between the device security credential and the device identifier, and perform processes such as autonomous discovery, trusted authentication, and automatic connection initiation on a device with a different account based on the correspondence between the device security credential and the device identifier, to implement a cross-device service.

To better describe the technical solutions provided in embodiments of this application, the following uses a cross-device service of Super home screen as an example to describe a process of automatic device discovery, authentication, and automatic connection and a process of using a shared device after device sharing.

FIG. 9 is a diagram of a framework of a device sharing system according to an embodiment of this application. The device sharing system may include a cloud side and a device side. The cloud side may include a home cloud, a device cloud, and a trust chain cloud. For specific descriptions, refer to the foregoing descriptions. Details are not described herein again. A software system architecture of a terminal device on the device side may include an application layer, a framework and service layer, a hardware abstraction layer (Hardware Abstraction Layer, HAL) layer, and a Linux kernel. The first device 21, the second device 23, and the third device 24 each may include the software system architecture.

The application layer includes applications such as an AI life application, a Shell application, a device credential association service application, and a device-cloud connection service application. AI life may provide device sharing and storage, to manage devices in a family group. The Shell application is used for cross-device application starting and control. The home screen application is used for cross-device application information synchronization and display. The device-cloud connection service is used to implement a device-cloud communication service, and is used for connection and communication between a device side device and a cloud service. The device credential management service is used to provide a capability of managing device security credentials.

The framework and service layer includes modules such as collaborative configuration management, distributed hardware virtualization, device management (Device Management, DM), device authentication, a device profile (Device Profile, DP), and a soft bus.

The collaborative configuration management service provides atomic capabilities of collaborative services such as "application migration management", "hardware migration management", and "display adaptation strategy", and can make decisions on collaboration strategies based on configurable collaboration rules and invoke a distributed capability of Super device to implement collaboration and implement migration management and display strategy adaptation.

Distributed hardware virtualization is used to support in invoking hardware capabilities across devices. For example, hardware capabilities such as a camera, an audio, and a GPS can be invoked through camera virtualization, audio virtualization, and GPS virtualization.

Device management is used to support device discovery, device binding, query of a trusted device list, and query of a currently trusted device.

The device profile is used to store trusted authorization relationship data, that is, a correspondence between a device security credential and a device identifier.

Device authentication is used to support a device authentication service.

The soft bus is configured to provide connection capabilities such as bottom-layer device discovery and device connection.

Based on the software system architecture of the device-side device shown in FIG. 9, after a device is shared, the shared device may monitor online and offline events of a device through the soft bus. During device trusted authentication, the correspondence between the device security credential and the device identifier stored in the DP may be obtained to identify whether there is a trusted device in surrounding devices (for example, whether there is a trusted device in the family group). After the device is trusted, a device connection is automatically initiated through the soft bus, and application data of the device is synchronized.

For example, FIG. 10 is a diagram of a Super home screen implementation process in a family group device sharing scenario according to an embodiment of this application. The process may be divided into a plurality of phases: home device scanning, home device automatic discovery and connection, and cross-device exchange of application information and a user interface; and the like. FIG. 10 shows an example in which a home public device is a cockpit or a large-screen device, and a family member controlling device is a mobile phone of the member.

It may be understood that, in the family group device sharing scenario, the family public device is usually used as a shared device, and is shared with another user in the family group for use. For example, refer to FIG. 1A. The first user 12 and the second user 13 are in a same family group, the first user 12 is an owner, and owns the large-screen device 125 and the intelligent cockpit 126. The large-screen device 125 and the intelligent cockpit 126 are public devices in a family, the first user 12 shares these public devices with the second user 13 by performing a device sharing operation on the mobile phone 121. The second user 13 may use the large-screen device 125 and the intelligent cockpit 126 through the mobile phone 131, for example, use, on the large-screen device 125 and the intelligent cockpit 126 based on a Super home screen service, an application installed on the mobile phone 131.

In the home device scanning phase, the home public device and the member controlling device first enable wireless functions such as Bluetooth and Wi-Fi, to trigger the home public device and the member controlling device to send wireless broadcast information and scan surrounding wireless broadcast information. As shown in FIG. 10, the member controlling device is a mobile phone, and the home public device is a cockpit or a large-screen device. After the Bluetooth function is enabled on the mobile phone and the cockpit or the large-screen device, the home public device scans Bluetooth broadcast of a surrounding device.

In the home device automatic discovery and connection phase, after Bluetooth of the cockpit or the large-screen device discovers the device by using a device discovery capability provided by the soft bus and the device management module, the device authentication module may be invoked to perform device trusted authentication. In the device authentication process, the device authentication module may query a device security credential of the mobile phone in the DP. If the device security credential of the mobile phone is found, the device authentication module determines that the mobile phone is secure and trusted, and actively initiates a connection to the mobile phone. After the cockpit or the large-screen device establishes the connection to the mobile phone, the DM binds device information of the mobile phone, notifies the home screen application that the device goes online, and synchronizes application data of the mobile phone. The DP stores a correspondence between a device identifier of the mobile phone and the device security credential, and the correspondence may be obtained according to the foregoing device sharing solution.

In the cross-device application information exchange phase, home screen applications of the mobile phone and the cockpit or the large-screen device perform service interaction, so that the cockpit or the large-screen device obtains the application data of the mobile phone.

In the user interface phase, the cockpit or the large-screen device displays an icon of an application of the mobile phone on Super home screen based on the application data of the mobile phone through the Shell application and the home screen application, that is, displays a Super home screen icon. For example, refer to the scenario shown in FIG. 1C-1 and FIG. 1C-2. An icon of an application installed on the mobile phone 121 is displayed on an interface of the large-screen device 125.

It should be noted that, in the home group device sharing scenario, when a device is shared with a plurality of home group members, the shared device may locally store device security credentials of terminal devices of the plurality of users, and the terminal devices of the plurality of users may be automatically discovered and authenticated based on the device security credentials of the terminal devices of the plurality of users. For example, refer to FIG. 5. Both Xiao Ming and Jack@mail.com are family group members, and the large-screen device 51 may identify trusted devices of Xiao Ming and Jack@mail.com. In addition, the shared device further locally stores a correspondence between user information and a terminal device, so that a user to which the terminal device belongs can be identified, and the user information is displayed in the connectable device list.

It can be learned from the foregoing that, according to the device sharing solution provided in embodiments of this application, a device security credential of a device with a different account may be stored on the device side. Based on the device security credential, a shared device may automatically discover a device (the device with the different account) of a family group member, perform trusted authentication on the device of the family group member, and automatically initiate a connection to the device of the family group member. The family group member does not need to perform trusted authentication by scanning a code or entering a PIN code, and operations such as scanning a code or entering a PIN code does not need to be performed for each connection. For example, a device A can directly access an application list on a device B and filter and control applications based on a device capability.

After the shared device displays Super home screen, a user may use, on the shared device, an application installed on the device with the different account. When the user uses the application installed on the device with the different account on the shared device, the shared device can perform adaptation based on a screen resolution and a landscape/portrait orientation of the shared device, and supports cross-device hardware migration. For example, the shared device may perform display based on the screen resolution of the shared device. For another example, the shared device may perform application recording by using a microphone of the shared device, play a sound by using a speaker of the shared device, record a video by using a camera of the shared device, or perform positioning by using a GPS of the shared device.

For example, FIG. 11 is a diagram of a Super home screen service according to an embodiment of this application. The shared device is a cockpit or a large-screen device, and the device with the different account is a mobile phone. The cockpit or the large-screen device synchronizes application data of the mobile phone, and displays Super home screen based on a Launcher application. Super home screen includes icons of applications installed on the mobile phone. The process may include the following steps.
1. The user taps an application icon on Super home screen of the cockpit or the large-screen device. In response to the tap operation, the cockpit or the large-screen device starts or launches a Shell application, loads an application interface of the mobile phone through the Shell application, and starts the application through starActivity.
2. A collaborative configuration management service of the cockpit or the large-screen device notifies a collaborative configuration management service of the mobile phone to start a corresponding application.
3. The collaborative configuration management service of the mobile phone calculates an application display strategy (for example, landscape/portrait mode switching and resolution adaptation); invokes virtualized hardware capabilities; invokes a DDMS to create a virtual display, obtains hardware capabilities (including a virtual audio capability, a virtual camera capability, and an integrated GPS capability) and uses the hardware capabilities; configures a camera strategy to use a camera of the cockpit or the large-screen device; and configures an audio splitting strategy to split a media sound and a navigation sound of the application of the mobile phone to an audio device of the cockpit or the large-screen device.
4. The collaborative configuration management service of the mobile phone invokes a system interface to start the application, and displays the application on the virtual display.
5. The mobile phone starts projection, that is, starts a distributed hardware virtualization service, and sends a virtual application interface to the cockpit or the large-screen device for display.
6. The cockpit or the large-screen device receives a projection data stream transmitted by the mobile phone, to receive a data stream displayed by the application of the mobile phone, and sends the projection data stream to the Shell application for display.

It can be learned from the foregoing that, in the family group device sharing scenario, a device-side device implements an application hopping function based on a device security credential, implements adaptation of an application to device screen display, supports access to a distributed hardware capability, and the like. For example, the device A may start an application of the device B, an application interface is adapted based on a screen of the device A, and the application is supported to use various hardware capabilities of the device A.

In other words, when the user taps an across-device application icon on the large screen side, the large screen starts a HiWindow application. The collaborative configuration management on the large screen side notifies the collaborative configuration management on the mobile phone side to start a corresponding application. The collaborative configuration management on the mobile phone side processes an application display strategy (App multiplier, a landscape, or the like), and invokes a virtualization hardware capability and DDMS to create a virtual display. The collaborative configuration management service on the mobile phone side invokes an AMS interface to start the application and display the application on the virtual display. The mobile phone side starts a projection service and prepares to project the virtual display to the large screen side. The large screen side receives projection data and displays the projection data in the HiWindow application.

The HiWindow application is used for displaying an application on the mobile phone side. The Launcher is used for Super home screen establishment notification and UI display. The collaborative configuration management is used to manage strategies of cross-device application migration and hardware migration. The App multiplier is used to support start of an application in an App multiplier manner and support multi-window display of the application. A distributed hardware manager service is used to provide hardware virtualization, a cast+ projection capability, and the like. The distributed window management (DWMS) is used to provide an application projection interface capability, window display adaptation logic, and architecture reconstruction.

FIG. 12 is a diagram of a structure of an electronic device 1200. The electronic device 1200 may include a processor 1210, a memory 1220, and a communication module 1230. The electronic device 1200 may be a first device, a second device, or a third device, or may be a cloud server.

It may be understood that the structure illustrated in this embodiment of this application does not constitute a specific limitation on the electronic device 1200. In some other embodiments of this application, the electronic device 1200 may include more or fewer components than those shown in the figure, or some components may be combined, or some components may be split, or different component arrangements may be used. The components shown in the figure may be implemented by hardware, software, or a combination of software and hardware. For example, when the electronic device 1200 is a terminal device, the electronic device 1200 may further include a camera, an audio module, a display, a sensor module, and the like.

The processor 1210 may include one or more processing units. For example, the processor 1210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may generate an operation control signal based on an instruction operation code and a time sequence signal, to complete control of instruction reading and instruction execution.

The communication module 1230 of the electronic device 1200 may be one of a wireless communication module and a mobile communication module.

The mobile communication module may provide a wireless communication solution that includes 2G/3G/4G/5G or the like and that is applied to the electronic device 1200. The mobile communication module may include at least one filter, a switch, a power amplifier, a low noise amplifier (low noise amplifier, LNA), and the like. The mobile communication module may receive an electromagnetic wave through the antenna, perform processing such as filtering and amplification on the received electromagnetic wave, and send a processed electromagnetic wave to the modem processor for demodulation. The mobile communication module may further amplify a signal modulated by the modem processor, and convert the signal into an electromagnetic wave for radiation through the antenna.

The wireless communication module may provide a wireless communication solution that is applied to the electronic device 1200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module may be one or more components that integrate at least one communication processing module. The wireless communication module receives an electromagnetic wave through the antenna, performs frequency modulation and filtering on an electromagnetic wave signal, and sends a processed signal to the processor 1210. The wireless communication module may further receive a to-be-sent signal from the processor 1210, perform frequency modulation and amplification on the signal, and convert, through the antenna, the signal into an electromagnetic wave for radiation.

In some embodiments, the antenna and the mobile communication module in the electronic device 1200 are coupled, and the antenna and the wireless communication module in the electronic device 1200 are coupled, so that the electronic device 1200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The memory 1220 may be configured to store computer-executable program code. The executable program code includes instructions. The memory 1220 may include a program storage area and a data storage area. The program storage area may store an operating system, an application required by at least one function (for example, a voice playing function or an image playing function), and the like. The data storage area may store data (such as audio data and an address book) created during use of the electronic device 1200, and the like. In addition, the memory 1220 may include a high-speed random access memory, and may further include a nonvolatile memory, for example, at least one magnetic disk storage device, a flash memory device, or a universal flash storage (universal flash storage, UFS). The processor 1210 runs the instructions stored in the memory 1220 and/or instructions stored in a memory disposed in the processor, to perform various function applications and data processing of the electronic device 1200.

For example, when the electronic device 120 is the first device, and the processor 1210 executes the instructions stored in the memory 1220, the processor 1210 implements a related procedure performed by the first terminal device in any one of the foregoing device sharing procedures, for example, sends a target message to the cloud server in response to a first operation.

For example, when the electronic device 1200 is the second device or the third device, and the processor 1210 executes the instructions stored in the memory 1220, the processor 1210 implements a related procedure performed by the second terminal device or the third terminal device in any one of the foregoing device sharing procedures.

For example, when the electronic device 1200 is the cloud server, and the processor 1210 executes the instructions stored in the memory 1220, the processor 1210 implements a related procedure performed by the cloud server in any one of the foregoing device sharing procedures, for example, generates a correspondence between a device security credential and a device identifier based on device information, and sends the correspondence to a corresponding terminal device.

A person skilled in the art may clearly understand that, for the purpose of convenient and brief description, division into the foregoing function units or modules is merely used as an example for description. In an actual application, the foregoing functions may be allocated to different function units or modules for implementation based on a requirement. That is, an inner structure of the apparatus is divided into different function units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units or modules in the foregoing system, refer to a corresponding process in the foregoing method embodiments. Details are not described herein again.

When the integrated unit is implemented in the form of the software function unit and sold or used as an independent product, the integrated unit may be stored in a computer-readable storage medium. Based on such an understanding, all or some of the processes of the method in embodiments of this application may be implemented by a computer program instructing relevant hardware. The computer program may be stored in a computer-readable storage medium. When the computer program is executed by a processor, steps in the foregoing method embodiments may be implemented. The computer program includes computer program code. The computer program code may be in a source code form, an object code form, an executable file form, some intermediate forms, or the like. The computer-readable medium may include at least any entity or apparatus that can carry computer program code to the electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal based on legislation and patent practices.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus, electronic device, and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

The electronic device provided in embodiments of this application may include a memory, a processor, and a computer program that is stored in the memory and that can be run on the processor. When executing the computer program, the processor implements the method according to any one of the foregoing method embodiments.

An embodiment of this application further provides a computer-readable storage medium. The computer-readable storage medium stores a computer program. When the computer program is executed by a processor, steps in the foregoing method embodiments may be implemented.

An embodiment of this application provides a computer program product. When the computer program product runs on an electronic device, the electronic device is enabled to implement the steps in the foregoing method embodiments when executing the computer program product.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, descriptions of embodiments have respective focuses. For a part that is not described in detail or recorded in an embodiment, refer to related descriptions in other embodiments. It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application. In addition, in descriptions of this specification and claims of this application, terms "first", "second", "third", and the like are merely intended for differentiated description, but shall not be understood as an indication or an implication of relative importance. Reference to "an embodiment", "some embodiments", or the like described in the specification of this application indicates that one or more embodiments of this application include a specific feature, structure, or characteristic described with reference to those embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device sharing system, comprising a first device, a cloud server, a second device, and a third device, wherein a first account is logged in on the first device and the second device, a second account is logged in on the third device, and the first account is different from the second account;
the first device is configured to send a target message to the cloud server in response to one or more operations, wherein the target message comprises first information indicating the first account and second information indicating the second account;
the cloud server is configured to transmit first trusted authorization information to the second device and second trusted authorization information to the third device based on the first information and the second information, wherein the first trusted authorization information comprises information about association between a device identifier of the third device and a first device security credential, and the second trusted authorization information comprises information about association between a device identifier of the second device and a second device security credential;
the second device is configured to: receive the first trusted authorization information from the cloud server, and store the first trusted authorization information, wherein the first trusted authorization information is authentication information used to authenticate the third device in a process of establishing a connection between the second device and the third device; and
the third device is configured to: receive the second trusted authorization information from the cloud server, and store the second trusted authorization information, wherein the second trusted authorization information is authentication information used to authenticate the second device in the process of establishing the connection between the second device and the third device.

2. The system according to claim 1, wherein the first device is specifically configured to:
display a group member adding interface in response to a first operation;
receive a second operation performed on the group member adding interface, wherein the second operation is used to determine a user invited to join a group; and
send the target message to the cloud server in response to a third operation, wherein
the first information comprises an identifier of a group owner or information about the first account, the second information comprises a member identifier of the invited user in the group or information about the second account, the group owner is the first account, the second device is a device in the group, and an account of the user invited to join the group is the second account.

3. The system according to claim 1, wherein
the second device is further configured to: obtain wireless broadcast information of the third device, wherein the wireless broadcast message of the third device comprises the device identifier of the third device; and if the first device security credential corresponding to the device identifier of the third device is found from the first trusted authorization information, determine that the third device is a trusted device; or
the third device is further configured to: obtain wireless broadcast information of the second device, wherein the wireless broadcast information of the second device comprises the device identifier of the second device; and if the second device security credential corresponding to the device identifier of the second device is found from the second trusted authorization information, determine that the second device is a trusted device.

4. The system according to claim 3, wherein the second device is further configured to:
automatically send a connection request to the trusted third device; or if there are at least two trusted third devices, display the at least two trusted third devices in a connectable device list, and in response to a selection operation performed by a user on the connectable device list, send a connection request to a trusted third device specified by the selection operation.

5. The system according to any one of claims 1 to 4, wherein the first device and the second device are a same device.

6. A device sharing method, applied to a first device, wherein the method comprises:
displaying a group member adding interface in response to a first operation, wherein the first operation is an operation on a group member invitation control; and
sending a target message to a cloud server in response to a second operation, wherein the target message is used to trigger the cloud server to transmit first trusted authorization information to a second device and transmit second trusted authorization information to a third device, the second operation is an operation on a member invitation option or at least one piece of user information displayed on the group member adding interface, and the second operation is used to determine a user invited to join a group, wherein
the target message comprises first information indicating a first account and second information indicating a second account, the group owner is the first account, the user invited to join the group is the second account, and the second device is a device in the group;
the first account is logged in on the first device and the second device, the second account is logged in on the third device, and the first account is different from the second account;
the first trusted authorization information comprises information about association between a device identifier of the third device and a first device security credential;
the second trusted authorization information comprises information about association between a device identifier of the second device and a second device security credential; and
the first trusted authorization information is authentication information used to authenticate the third device in a process of establishing a connection between the second device and the third device, and the second trusted authorization information is authentication information used to authenticate the second device in the process of establishing the connection between the second device and the third device.

7. The method according to claim 6, wherein the first information comprises an identifier of the group owner or information about the first account, and the second information comprises a member identifier of the invited user in the group or information about the second account.

8. A device sharing method, applied to a first device, wherein the method comprises:
in response to a first operation, determining a second device from a plurality of devices on which a first account is logged in, wherein the first operation is used to determine a shared device; and
sending a target message to a cloud server in response to a second operation, wherein the target message is used to trigger the cloud server to transmit first trusted authorization information to the second device and transmit second trusted authorization information to a third device, the target message comprises first information indicating the first account and second information indicating a second account, the second operation is an operation on a member sharing option or at least one piece of user information displayed on a shared member selection interface, the second operation is used to determine a user with who the second device is shared, and the user with who the second device is shared is the second account;
the first account is logged in on the first device and the second device, the second account is logged in on the third device, and the first account is different from the second account;
the first trusted authorization information comprises information about association between a device identifier of the third device and a first device security credential;
the second trusted authorization information comprises information about association between a device identifier of the second device and a second device security credential; and
the first trusted authorization information is authentication information used to authenticate the third device in a process of establishing a connection between the second device and the third device, and the second trusted authorization information is authentication information used to authenticate the second device in the process of establishing the connection between the second device and the third device.

9. The method according to claim 8, wherein the first information comprises information about the second device or information about the first account, and the second information comprises information about the second account.

10. The method according to claim 8 or 9, wherein after sending the target message to the cloud server, the method further comprises:
sending a sharing cancellation instruction to the cloud server in response to a third operation, wherein the third operation is used to cancel sharing of the second device with the second account, the sharing cancellation instruction is used to trigger the cloud server to delete an authorization relationship between the second account and the second device, and send a first deletion instruction to the second device and a second deletion instruction to the third device, the first deletion instruction instructs the second device to delete the stored first trusted authorization information, and the second deletion instruction instructs the third device to delete the stored second trusted authorization information.

11. The method according to any one of claims 8 to 10, wherein the second trusted authorization information further comprises information about association between a device identifier of the first device and a third device security credential, and the second trusted authorization information is also authentication information used to authenticate the first device in a process of establishing a connection between the first device and the third device; and
the method further comprises:
receiving the first trusted authorization information from the cloud server;
obtaining wireless broadcast information of the third device, wherein the wireless broadcast message of the third device comprises the device identifier of the third device;
if the first device security credential corresponding to the device identifier of the third device is found from the first trusted authorization information, determining that the third device is a trusted device; and
establishing a communication connection to the third device after the third device determines, based on the second trusted authorization information, that the first device is the trusted device.

12. A device sharing method, applied to a cloud server, wherein the method comprises:
receiving a target message from a first device, wherein the target message comprises first information indicating a first account and second information indicating a second account, the first account is different from the second account, the target message is information sent by the first device in response to an operation of sharing a second device with the second account, and the first account is logged in on the first device and the second device; and
transmitting first trusted authorization information to the second device and second trusted authorization information to a third device based on the target message, wherein the second account is logged in on the third device, wherein
the first trusted authorization information comprises information about association between a device identifier of the third device and a first device security credential; the second trusted authorization information comprises information about association between a device identifier of the second device and a second device security credential; and the first trusted authorization information is authentication information used to authenticate the third device in a process of establishing a connection between the second device and the third device, and the second trusted authorization information is authentication information used to authenticate the second device in the process of establishing the connection between the second device and the third device.

13. The method according to claim 12, wherein transmitting the first trusted authorization information to the second device and the second trusted authorization information to the third device based on the target message comprises:
obtaining the information about association between the device identifier of the second device and the second device security credential based on the first information;
generating the second trusted authorization information based on the information about association between the device identifier of the second device and the second device security credential;
obtaining the information about association between the device identifier of the third device and the first device security credential based on the second information;
generating the first trusted authorization information based on the information about association between the device identifier of the third device and the first device security credential; and
transmitting the second trusted authorization information to the third device, and transmitting the first trusted authorization information to the second device.

14. The method according to claim 13, wherein the method further comprises:
obtaining information about association between a device identifier of the first device and a third device security credential based on the first information; and
transmitting the first trusted authorization information to the first device; and
generating the second trusted authorization information based on the information about association between the device identifier of the second device and the second device security credential comprises:
generating the second trusted authorization information based on the information about association between the device identifier of the second device and the second device security credential and the information about association between the device identifier of the first device and the third device security credential, wherein the second trusted authorization information is also authentication information used to authenticate the first device in a process of establishing a connection between the first device and the third device.

15. The method according to any one of claims 12 to 14, wherein the method further comprises:
receiving a sharing cancellation instruction from the first device, wherein the sharing cancellation instruction is an instruction sent by the first device in response to an operation of canceling sharing of the third device with the second account; and
in response to the sharing cancellation instruction, deleting an authorization relationship between the second account and the second device, and sending a first deletion instruction to the second device and a second deletion instruction to the third device, wherein the first deletion instruction instructs the second device to delete the stored first trusted authorization information, and the second deletion instruction instructs the third device to delete the stored second trusted authorization information.

16. A device sharing method, applied to a device sharing system, wherein the device sharing system comprises a first device, a second device, and a third device, a first account is logged in on the first device and the second device, a second account is logged in on the third device, and the first account is different from the second account; and
the method comprises:
sending, by the first device, a target message to a cloud server in response to one or more operations, wherein the target message comprises first information indicating the first account and second information indicating the second account, the one or more operations are used to share the second device with the second account, and the target message is used to trigger the cloud server to transmit first trusted authorization information to the second device and transmit second trusted authorization information to the third device;
receiving, by the second device, the first trusted authorization information from the cloud server, and storing the first trusted authorization information, wherein the first trusted authorization information is authentication information used to authenticate the third device in a process of establishing a connection between the second device and the third device; and
receiving, by the third device, the second trusted authorization information from the cloud server, and storing the second trusted authorization information, wherein the second trusted authorization information is authentication information used to authenticate the second device in the process of establishing the connection between the second device and the third device, wherein
the first trusted authorization information comprises information about association between a device identifier of the third device and a first device security credential, and the second trusted authorization information comprises information about association between a device identifier of the second device and a second device security credential.

17. The method according to claim 16, wherein sending, by the first device, the target message to the cloud server in response to the one or more operations comprises:
displaying, by the first device, a group member adding interface in response to a first operation, wherein the first operation is an operation on a group member invitation control; and
sending, by the first device, the target message to the cloud server in response to a second operation, wherein the second operation is an operation on a member invitation option or at least one piece of user information displayed on the group member adding interface, and the second operation is used to determine a user invited to join a group, wherein
the first information comprises an identifier of a group owner or information about the first account, the second information comprises a member identifier of the invited user in the group or information about the second account, the group owner is the first account, the user invited to join the group is the second account, and the second device is a device in the group.

18. The method according to claim 16 or 17, wherein the method further comprises:
obtaining, by the second device, wireless broadcast information of the third device, wherein the wireless broadcast message of the third device comprises the device identifier of the third device;
if the first device security credential corresponding to the device identifier of the third device is found from the first trusted authorization information, determining, by the second device, that the third device is a trusted device; and
establishing, by the second device, a trusted communication connection to the third device after the third device determines, based on the second trusted authorization information, that the first device is a trusted device.

19. A device, comprising a memory, a processor, and a computer program that is stored in the memory and that can be run on the processor, wherein when executing the computer program, the processor implements the method according to any one of claims 6 to 11 or claims 12 to 15.

20. A computer-readable storage medium, wherein the computer-readable storage medium stores a computer program, and when the computer program is executed by a processor, the method according to any one of claims 6 to 11 or claims 12 to 15 is implemented.
